(19) Europäisches Patentamt
European Patent Office
Office européen des brevets

(11) EP 0 926 796 A2

(12) **EUROPEAN PATENT APPLICATION**

(43) Date of publication:
**30.06.1999 Bulletin 1999/26**

(51) Int. Cl.$^6$: **H02H 7/18**, H01M 10/42

(21) Application number: **98124291.0**

(22) Date of filing: **21.12.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.12.1997 JP 35918197**

(71) Applicant: **Hitachi, Ltd.**
**Chiyoda-ku, Tokyo 101-8010 (JP)**

(72) Inventors:
- **Emori, Akihiko**
  **Hitachi-shi, Ibaraki 316-0014 (JP)**
- **Miyazaki, Hideki**
  **Hitachi-shi, Ibaraki 319-1413 (JP)**
- **Akiyama, Noboru**
  **Hitachinaka-shi, Ibaraki 312-0052 (JP)**
- **Takanuma, Akihiro**
  **Shimotsuga-gun, Tochigi 329-4425 (JP)**
- **Miyamoto, Yoshimi**
  **Tochigi-shi, Tochigi 328-0011 (JP)**

(74) Representative:
**Beetz & Partner**
**Patentanwälte**
**Steinsdorfstrasse 10**
**80538 München (DE)**

(54) **Protection apparatus for a storage battery**

(57) A protection apparatus for storage battery for storing and feeding power comprises an anomaly detection unit (103) for detecting an anomalous state in at least one of the voltage, a current flow, and the frequency in at least one of an input power and an output power of the storage battery, the temperature and the pressure in the storage battery, and an external force applied to the storage battery, and a short-circuit unit (102) for shorting both electrodes (104, 105) of the storage battery when an anomaly is detected in at least one of the input power, the output power, and the storage battery.

*FIG.1*

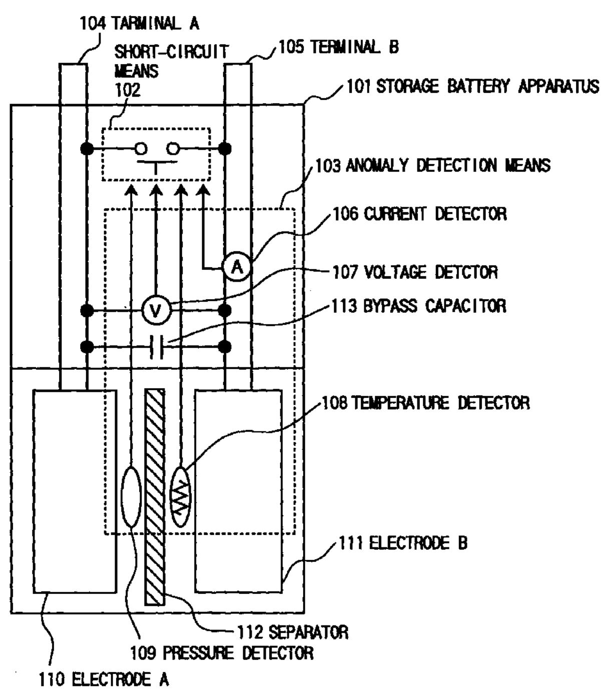


EP 0 926 796 A2

## Description

BACKGROUND OF THE INVENTION

The present invention relates to a protection apparatus or a safety apparatus for either a storage battery or a charge / discharge apparatus, further for an electrical apparatus using either a storage battery or a charge / discharge apparatus, and especially to a protection apparatus for a storage battery such as a lithium secondary cell including volatile or inflammable substances, an electric double-layer capacitor, and so on.

A protection circuit to open an input / output portion of a storage battery when an anomalous increase of the temperature in the storage battery is detected by using a thermistor, etc., has been disclosed, for example, in Japanese Patent Application Laid-Open Hei-6 203827.

Fig. 19 is a diagram showing a conventional protection circuit. In this figure, numerals 1901, 1902, 1903, 1904, 1905, and 1906 are a storage battery, the positive electrode terminal, the negative electrode terminal, a switch, a thermistor, and a charge / discharge unit, respectively. The positive and negative electrode terminals 1902 and 1903 of the storage battery 1901 are connected to the charge / discharge unit 1906 via the switch 1904. Moreover, the thermistor 1904 is provided in the storage battery 1901, and detects the temperature in the storage battery 1901. The switch 1904 is opened / closed according to the output of the thermistor 1905, and if the temperature in the storage battery 1901 exceeds a preset value, the switch 1904 is opened, and the storage battery 1901 is electrically disconnected from the charge / discharge unit 1906. Furthermore, the positive and negative electrode terminals 1902 and 1903 of the storage battery 1901 are disconnected from an external circuit to stop charging / discharging of the energy.

Also, to improve the safety of a battery, another conventional technique disclosed in Japanese Patent Application Laid-Open Hei-7 201372 presents a diaphragm valve provided at a battery, for forcing the battery to the discharge state when the internal pressure of the battery increases and preventing the battery from exploding even if another shock is further given to the battery.

Fig. 20 shows a vertical section of the above-mentioned conventional diagram. The diagram shown in this figure is composed of a valve element 2001, a metal film 2002, a battery case 2003, a resin layer 2004, a positive electrode piece 2005, a negative electrode piece 2006, and an insulation layer 2007. The upper surface of the valve element 2001 is laminated with the metal film 2002. A part of the valve element 2001 is inserted into a hole provided in the battery case 2003, and the metal film 2002 is positioned under both the positive electrode piece 2005 and the negative electrode piece 2006 via the insulation layer 2007 to electrically insulate the metal film 2002 from the electrode pieces 2005 and 2006. Thus, if the internal pressure of the battery increases, the valve element 2001 and the metal film 2002 expand. Consequently, the metal film 2002 contacts the positive electrode piece 2005 and the negative electrode piece 2006, and the positive and negative electrodes are electrically connected and shorted.

In a conventional protection circuit, when a storage battery falls in an anomalous state, an input and an output portion of the storage battery are opened, that is, both electrodes are opened. Accordingly, inputting or outputting the energy is interrupted, and the storage battery is protected from actions of an external system.

However, by opening both the electrodes, it is not possible to protect the storage battery against internal anomalous phenomena of the storage battery, for example, against an short-circuit of the electrodes inside the battery due to the collapse of internal elements or the break-away of active substances. Furthermore, since the storage battery is isolated from external circuits, it has been impossible to protect the battery by forcing an internal reaction such as a thermal excursion to be suppressed.

Furthermore, a portable storage battery sometimes is stored while being disconnected from a charge / discharge apparatus or an external electrical circuit. Also, it often happens that, by improperly using or adequately disposing a storage battery, the battery is kept in a high temperature environment, or elements inside the battery are collapsed.

Therefore, this conventional technique has a substantial problem in that it is impossible to protect a storage battery against an internal anomaly.

In the above conventional diaphragm valve in which the increase of the internal pressure is utilized to protect a storage battery, since the increase of the internal pressure indicates the generation of gas in electrolytic solution which occurs at the final stage of anomaly in the battery, the battery can not be used again after the diaphragm valve is once actuated. Moreover, since the increase of the internal pressure is small in a local anomaly such as a internal short-circuit, the diaphragm valve does not work against an internal local anomaly.

As mentioned above, the conventional techniques have not been achieved based on a sufficient clarification for the assumable kinds of anomalies, that is: a process flow leading to each of the anomalies, the relationship between each anomaly and parameters to be detected for the anomaly, the effectiveness of discharging the electric energy in an anomalous state of a storage battery for securing the safety of the battery, and a control method of discharging the electric energy. Therefore, the conventional techniques can present only an insufficient protection function, and their reliability and safety are also not sufficient.

Furthermore, since a charge / discharge apparatus capable of completely suppressing the occurrence of an anomaly is necessary to use a battery to which one of the above conventional techniques is applied, its operational flexibility is poor.

Accordingly, it has been strongly required that a protection apparatus capable of protecting a storage battery before or in an early stage of the occurrence of an anomaly is developed based on the above-mentioned clarification for the assumable kinds of anomalies, and that the safety is secured against more various kinds of anomalies which may occur in the storage battery by a protection apparatus.

SUMMARY OF THE INVENTION

The present invention has been achieved in consideration of the above-described problems, and is aimed at providing a protection apparatus for a storage battery, by which the storage apparatus can be protected from actions given from the outside and an anomaly occurring inside the battery before or in an early stage of the anomaly, and the safety of the battery is secured from various kinds of anomalies, whereby the operational flexibility of the storage battery can be improved so that the storage battery can be also separately used in the same manner as a dry cell.

A feature of the present invention established to attain the above object is a protection apparatus for storage battery comprising: an anomaly detection means for detecting an anomalous state in at least one of the voltage, a current flow, and the frequency in at least one of the input and output power of the storage battery, and the temperature and the pressure in the storage battery, and an external force applied to the storage battery, the anomaly detection means provided in at least one of the storage battery, a charge / discharge apparatus connected to the battery, and an electrical apparatus using the battery; and a short-circuit means for shorting the both electrodes of the storage battery when an anomaly is detected in at least one of the input power, the output power, and the storage battery.

The above protection apparatus for a storage battery includes a means for performing one of a short-circuit operation and a open-circuit operation for the electrodes of the storage battery according to the state of the detected anomaly.

In the above protection apparatus for a storage battery, the short-circuit means further includes a short-circuit condition controlling means for controlling at least one of a short-circuit current flow, the voltage, and a short-circuit resistance between the shorted electrodes.

It is preferable that the short-circuit condition controlling means controls the short-circuit current flow between the shorted electrodes according to the temperature in one of the storage battery and the short-circuit means.

The above protection apparatus for a storage battery protects the storage battery by shorting the electrodes and discharging the energy accumulated in the battery to suppress reactions generated in the battery when the protection apparatus detects an anomalous state in at least one of the voltage, a current flow, and the frequency in at least one of the input and output power of the storage battery, and the temperature and the pressure in the storage battery, and an external force applied to the storage battery.

Corresponding to the state of the detected anomaly, within a predetermined grade range of an anomaly, the above protection apparatus for a storage battery protects the storage battery from actions given from the outside by opening a terminal of at least one of the electrodes to interrupt the power input into or output from the battery.

Moreover, if the anomaly goes out of the predetermined grade range of an anomaly, the above protection apparatus for a storage battery protects the storage battery by shorting the electrodes to suppress reactions generated in the battery.

If the short-circuit means further includes a short-circuit condition controlling means for controlling at least one of a short-circuit current flow, the voltage, and a short-circuit resistance between the shorted electrodes, the storage battery or the short-circuit means can be protected by controlling the speed or the amount of reactions generated in the battery.

Thus, in accordance with the protection apparatus for a storage battery of the present invention, it is possible to protect the storage battery by interrupting actions given from the outside and suppressing reactions generated in the battery, which can provide a safe storage battery provided with a protection apparatus of an outstanding operational flexibility.

BRIEF DESCRIPTION OF THE DRAWINGS

Fig. 1 shows a schematic composition of a protection apparatus for a storage battery of a first embodiment according to the present invention.

Fig. 2 is a sequence diagram showing the process paths leading to each of anomalies which can be assumed in a lithium secondary battery.

Fig. 3 is an illustration of an internal short-circuit of the storage battery, which is caused by the shock applied from the outside.

Fig. 4 shows a discharge characteristic curve under the condition of constant current in a general storage battery.

Fig. 5 shows the relationship between the generating heat generated in a storage battery and the elapsed time, when the internal short-circuit is caused by the shock applied from the outside.

Fig. 6 shows a schematic composition of a protection apparatus for a storage battery of a second embodiment according to the present invention.

Fig. 7 shows a schematic composition of a protection apparatus for a storage battery of a third embodiment according to the present invention.

Fig. 8 shows the relationship between the resistance of a short-circuit means and the temperature in the short-circuit means used in a protection apparatus for a storage battery of a fourth embodiment according to the present invention.

Fig. 9 shows a schematic composition of a protection apparatus for a storage battery of a fifth embodiment according to the present invention.

Fig. 10 shows a schematic composition of a protection apparatus for a storage battery of a sixth embodiment according to the present invention.

Fig. 11 shows a schematic composition of a protection apparatus for a storage battery of a seventh embodiment according to the present invention.

Fig. 12 shows a schematic composition of a protection apparatus for a storage battery of an eighth embodiment according to the present invention.

Fig. 13 shows a schematic composition of a protection apparatus for a storage battery of a ninth embodiment according to the present invention.

Fig. 14 shows a schematic composition of a protection apparatus for a storage battery of a tenth embodiment according to the present invention.

Fig. 15 shows a schematic composition of a protection apparatus for a storage battery of an eleventh embodiment according to the present invention.

Fig. 16 shows a schematic composition of a protection apparatus for a storage battery of a twelfth embodiment according to the present invention.

Fig. 17 shows a schematic composition of a protection apparatus for a storage battery of a thirteenth embodiment according to the present invention.

Fig. 18 shows a schematic composition of a protection apparatus for a storage battery of a fourteenth embodiment according to the present invention.

Fig. 19 shows a schematic composition of a conventional protection circuit for a storage battery.

Fig. 20 is a vertical section of a conventional diaphragm valve.

## DETAILED DESCRIPTION OF THE EMBODIMENTS

Hereafter, details of embodiments will be explained with reference to the drawings. Here, the same reference numeral is attached to the same component in the drawings, and the same component is explained only in its first appearance.

Fig. 1 shows a schematic composition of the protection apparatus for a storage battery of a first embodiment according to the present invention. In this figure, the protection apparatus for a storage battery includes a storage battery apparatus 101, a short-circuit means 102, an anomaly detection means 103, a terminal A 104, a terminal B 105, a current detector 106, a voltage detector 107, a temperature detector 108, a pressure detector 109, an electrode A 110, an electrode B 111, a separator 112, and a bypass capacitor.

The electrode A 110 and the electrode B 111 are disposed opposite to each other via the separator 112, and are impregnated in electrolytic solution. Thus, the electric energy is stored in the electrode A 110 and the electrode B 111. The terminal A 104 and the terminal B 105 are connected to the electrode A 110 and the electrode B 111, respectively, and power is input in or output from the battery apparatus 101 via these terminals 104 and 105. The anomaly detection means 103 is provided between the electrodes A 110 and B 111, or in one of or between the terminals A and B, and the short-circuit means 102 and the bypass capacitor 113 are provided between the terminal A 104 and the terminal B 105. The short-circuit means 102 shorts the terminal A 104 and the terminal B 105 according to the result of detection performed by the anomaly detection means 103. Moreover, the bypass capacitor 113 bypasses power components of a frequency higher than a preset value so that the higher frequency components do not enter the battery apparatus 101. The battery apparatus 101 is composed of the above-explained means, units, and devices.

Meanwhile, the short-circuit means 102 can be composed by using a switching element such as a relay or a semiconductor device, for example, a MOS transistor.

Moreover, the anomaly detection means 103 is composed of the current detector 106 using a shunt resistor

serially inserted in the terminal B 105 or a current transformer magnetically coupled with the terminal B 105, the voltage detector 107 using a resistive divider, the temperature detector 108 using a thermistor or a temperature fuse, and the pressure detector 109 using a piezoelectric element or a pressure switch. The kind of a sensing element used in each detector is determined corresponding to the assumed kind or degree of an anomaly. Here, it is also possible to integrate two or more detectors in one chip IC or one hybrid IC.

Furthermore, the current detector 106 can be serially inserted in the terminal A 104. Although it is desirable to dispose the temperature detector 108 in a place such as the inside of electrode cores where the detector 108 can directly detect the temperature in the storage battery apparatus 101, the indirect detection, for example, from the surface of a case of the storage battery apparatus 101, is also possible.

For determining the grade of an occurring anomaly, it is necessary to set a threshold value for each anomalous state to the anomaly detection means 103 or the short-circuit means 102. As for a different way, a comparator which compares a detected value with a reference value can be also used for determining the grade of an occurring anomaly. Moreover, it is also possible to integrate the anomaly detection means 103 and the short-circuit means 102 by using an sensitive elements reacting to current or the temperature, for examples, NTC material, a bimetallic element, and so on.

By using the above-mentioned detectors, in all operational modes irrespective of charge / discharge mode or resting mode, if an anomaly occurs in the storage battery apparatus 101, the anomaly detection means 103 detects the occurring anomaly, and the short-circuit means 102 shorts the terminal A 104 and the terminal B 105. Thus, it becomes possible to protect the storage battery and keep its high safety without causing a highly dangerous accident such as a break-down or an explosion by discharging the accumulated energy in the storage battery apparatus 101 to the outside or by preventing power with anomalous current or frequency from entering the storage battery.

Furthermore, since over-current, over-voltage, or the anomalous increase of the temperature is prevented by bypassing power input to the storage battery 101, it is possible to return the storage battery to the normal state before the internal pressure is increased by generation of gas. After an anomaly occurred in the storage battery and the anomaly was subdued, the battery can be ordinarily used.

Thus, the safety and the operational flexibility of the storage battery apparatus is outstandingly improved without using a complicated protection or charge / discharge control apparatus, and the storage battery of the present invention can be used almost as unit cell.

In the following, the effectiveness of the method of shorting the output circuit for the storage battery for protecting the storage battery will be explained in detail.

For example, a diagram showing sequence paths leading to anomalies which can be assumed in a lithium secondary battery is shown in Fig. 2. Since the sequence paths complicatedly relates to anomaly inducing factors, reaction process, and reaction conditions, sequence paths different from the paths shown in this figure exist. In Fig. 2, only main sequence paths are shown for simple clarification. Here, thick solid lines, thin solid lines, and dotted lines indicate sequence paths in the storage or resting mode, the discharge mode, and the charge mode, respectively.

As operational modes of the storage battery, there are three kinds of modes: that is, the storage or resting mode, the discharge mode, and the charge mode, as mentioned above. Process parameters indicating an occurrence of an anomaly, a current flow and the voltage of the storage battery, the frequency of the current flow or the voltage, the temperature and the pressure in the storage battery, the separation of lithium metal, and the external force of an oscillation or a physical shock.

Firstly, one of sequence paths in the charge mode is explained as follows. That is, if over-voltage exceeding the rated value of the storage battery is applied to the storage battery, lithium metal is separated, and an explosion or a firing occurs in the storage battery, which is caused by reaction of the separated lithium metal with the electrolytic solution and other active substances.

In another path, when over-current exceeding the rated current flows, or the voltage with a frequency higher than the speed of ion conduction is applied to the storage battery, the temperature in the battery is increased by the internal loss beyond a permitted level, the electrolytic solution is decomposed, and finally, the pressure in the battery increases. Also, the electrolytic solution is decomposed by over-charge more than the voltage corresponding to the decomposition voltage of the electrolytic solution, which causes the increase of the pressure in the battery. The above processes are repeated and accelerated, and a thermal excursion also occurs. Finally, the accumulated pressure is discharged, which causes a rupture or a liquid leakage.

In the above state, if there exists a fire-making source such as the high voltage kept between the electrodes, the process goes to an explosion or a fire.

Next, in the discharge mode, similarly to the anomaly due to over-current or the voltage with a frequency higher than the rated frequency in the charge mode, the process goes to a rupture, a liquid leakage, an explosion, or a fire via the increase of the internal temperature and pressure.

Therefore, it seems that when an anomaly occurs in the storage battery, the progress of the anomaly can be prevented by disconnecting the storage battery from external systems and stopping the feed of energy to the battery.

However, if the anomalous reaction thoroughly progresses and a thermal excursion occurs, the disconnection

of the storage battery from the external systems can not suppress the internal anomalous reactions.

Furthermore, in the resting or storage mode in which the storage battery is disconnected from the external systems, it sometimes occurs that the process goes to a rupture, a liquid leakage, an explosion, or a fire via the increase of the temperature and pressure, which is due to a physical break-down caused by a fall, a vibration, heating of the battery, and so on, or by the increase of the open air temperature.

Therefore, it is not a radical counter-measure that when an anomaly occurs in the storage battery, feeding the energy to the storage battery is stopped.

Moreover, it may happen that although the storage battery receives over-current, over-voltage, or the voltage with a frequency higher than the rated frequency, the increase of the pressure or the separation of lithium metal is not caused, and the process does not go to a rupture, a liquid leakage, an explosion, or a fire. However, in the above situation, the performance degradation or the malfunction of the battery such as the degradation of its life time or capacity frequently occurs frequently.

For example, the separation of lithium metal, what is called the dendrite of lithium, due to over-current or over-voltage, causes the degradation in the efficiency of discharge, the maximum charge / discharge current, the capacity, or the life time. Furthermore, it may occur that the self-discharge due to the increase of micro-short-circuits increases. Moreover, in an over-charge state in which over-voltage is applied to the storage battery for a long time, since the electrode active material, especially the positive electrode active material, deteriorates, the performance and the characteristics of the storage battery also degrade.

Accordingly, it is indicated that it is necessary to detect an anomaly at an early stage by monitoring the voltage, current, a frequency of the voltage, the temperature, or the externally applied force, in order to quickly return the storage battery to a normal state for protecting the battery when an anomaly occurs.

Especially, since the increase of the internal pressure occurs at the final stage of the progress of an anomaly, and a rupture or a liquid leakage is at least caused, the storage battery cannot be used again. Thus, it was found by the inventors that monitoring the temperature is effective for preventing the increase of the internal pressure.

Furthermore, discharging the energy by simply shorting the electrodes causes over-current, and it is dangerous on the contrary. Therefore, discharging the energy by shorting the electrodes should be controlled so as not to cause over-current.

By taking up an anomaly in which the storage battery receives the external shock and physically breaks down, as an example, the internal reaction is explained for both cases of shorting and opening the electrodes below.

Fig. 3 illustrates an example of an internal short-circuit state of the storage battery, which is caused by the shock applied from the outside. In this example, the electrode B 111 breaks through the separator 112 and contacts the electrode A 110. Thus, a short-circuit occurs inside the storage battery.

Fig. 4 shows a discharge characteristic curve under the condition of constant current in a general storage battery. The comparatively stable voltage is kept by a definite time, and the voltage rapidly decreases afterward.

Fig. 5 shows the relationship between the heat generated in a storage battery and the elapsed time, when an internal short-circuit is caused by the shock applied from the outside. The dotted line shows changes of the generated heat when opening the output circuit of the battery in the occurrence of the internal short-circuit, and the solid line shows changes of the generated heat when shorting the output circuit of the battery in the occurrence of the internal short-circuit.

Generally, in the chemical reaction caused in the storage battery, the endothermic reaction occurs in the charge process, and the exothermic reaction occurs in the discharge process. For example, in a lithium secondary battery in which cobalt and carbon are used for the positive and negative electrodes, respectively, the reaction is expressed by the following chemical reaction equation.

$$LiCoO_2 + C_y \underset{\text{discharge } (+\Delta Q_c)}{\overset{\text{charge } (-\Delta Q_c)}{\rightleftarrows}} Li_{1-x}CoO_2 + C_yLi_x \quad \ldots (1)$$

Therefore, in the discharge mode, the exothermic reaction heat $\Delta Q_c$ is generated, which is proportional to the charge quantity of discharge or the product of discharge current and discharge time. Moreover, the resistance loss heat $Q_W$ is added to the generating heat $\Delta Q_c$, which is determined by the product of the discharge current and the internal resistance due to the mobility of the electrolytic solution, and the resistance of the surface phases at the electrodes and

the collector.

Firstly, in the state of the internal short-circuit shown in Fig. 3, if the output circuit is opened, the generating heat $Q_S$ expressed by the following equation is further added to $\Delta Q_c$ and $Q_W$.

$$Q_S = V^2 / R_S \quad (2),$$

where V and $R_S$ are the voltage of the storage battery and the resistance of the internal short-circuit part, respectively.

Since the contact at the internal short-circuit part is not tight, the resistance at the internal short-circuit part is comparatively large. Accordingly, as shown in Fig. 4, the charges accumulated in the storage battery cannot be immediately discharged, and the stable high voltage state continues for a long period. Therefore, $\Delta Q_c$, $Q_W$, and $Q_S$ increase proportional to time for the period. Thus, the total generating heat $W_o$ expressed by the following equation also increases in proportion to time as shown by the dotted line in Fig. 5.

$$W_o = \Delta Q_c + Q_W + Q_S \quad (3)$$

The relationship among amounts of the above generated heat depends on the resistance of the internal short-circuit part and the internal resistance, and approximately satisfies the following inequality.

$$Q_S > \Delta Q_c > Q_W \quad (4)$$

However, if the state in which the generated heat exceeds the heat dissipated from the surface of the battery case continues, the internal state of the storage battery goes beyond the critical heat generation level at which it is not possible to stably operate the storage battery, and the process finally goes to a rupture, a fire, or an explosion.

Furthermore, if the voltage is kept in the storage battery yet, and this voltage may cause a fire. Also, since the high voltage or the increase of the pressure activates the internal reaction, the critical heat generation level causing a fire or an explosion becomes lower, which easily causes the highly dangerous reaction such as a fire, an explosion, and so on.

On the other hand, if the output circuit is shorted, since the amount of charges output from the battery is large, the exothermic reaction heat $\Delta Q_c$ becomes larger than the joule heat $Q_S$ generated at the internal short-circuit. Moreover, the generating heat $Q_W$ due to the discharge current also increases. Thus, the relationship among values of the above generated heat is expressed by the following inequality.

$$Q_L, \Delta Q_c > Q_W > Q_S \quad (5),$$

where $Q_L$ is the heat generated at the shorted part of the output circuit. Also, the total generating heat W is expressed by the equation;

$$W = \Delta Q_c + Q_W + Q_S + Q_L \quad (6)$$

Therefore, the internal generating heat $W_L$ is expressed by the equation;

$$W_L = W_o - \Delta Q_c \quad (7)$$

As shown by the solid line in Fig. 5, although the internal generating heat $W_L$ increases at the comparatively high rate in proportion to time, it is clearly seen in Fig. 7 that $W_L < W_o$.

The duration period of heat generation is shortened by the time corresponding to the energy consumption $\Delta Q_c$. In addition, since the decrease of the current and voltage is caused by the decrease of the accumulated energy in the battery, which causes the rapid decrease of the generated heat amount, the duration period of heat generation is further shortened. It means that the state of the battery can be quickly stabilized before its break-down, and the dangerous period can be also shortened.

Furthermore, if the voltage and the energy accumulated in the storage battery becomes smaller, the probability that a break-down or an explosion of the battery will occur decreases, and the reactivity for chemical reaction also decreases. Accordingly, since the critical heat generation level increases, the conditions of the battery become safer.

Similarly, in occurrence of an anomaly other than the internal short-circuit also, it is obvious that since the dangerous period can be also shortened by shorting the output circuit and discharging the accumulated energy, and the reactivity for chemical reaction also decreases, which increases the critical heat generation level, the storage battery is quickly stabilized to a safe state.

On the other hand, in the storage battery of a large capacity, even if the output circuits of the terminals A 104 and B 105 are shorted, since it takes much time to discharge the accumulated energy, the generating heat may exceed the critical heat generation level, and the discharge time may also exceed the critical time, before the generating heat begins to decreases. If the short-circuit resistance is reduced to discharge the accumulated energy for a short period, and the discharge current is increased, the reaction heat $\Delta Q_c$ exceeds the heat dissipation ability of the storage battery apparatus 101, and the generating heat also exceed the critical heat generation level. Therefore, it is necessary to design so that the short-circuit means possesses a large rated current, which increases the size of the short-circuit means.

Accordingly, in the storage battery of a large capacity, it is necessary to select the value of the short-circuit resistance between the terminals A 104 and B 105 such that the discharge current does not increases the generating heat beyond the critical heat generation level by taking the generating heat $\Delta Q_c$, $Q_W$, and $Q_S$, and the heat capacity and the heat dissipation ability into consideration. Otherwise, it is necessary to control the short-circuit current so that the short-circuit means is not melted down by the short-circuit current, and so that the scale of the short-circuit is increased.

Fig. 6 shows a schematic composition of the protection apparatus for a storage battery of a second embodiment according to the present invention. In this figure, the protection apparatus further includes a short-circuit condition controlling unit 601, a reference-voltage generating device 602, a current-anomaly determining device 603, a voltage-anomaly determining device 604, a temperature-anomaly determining device 605, a pressure-anomaly determining device 606, and a short-circuit controlling unit 607.

The short-circuit condition controlling means 601 is inserted between the short-circuit means 102 and the anomaly detection means 103. Furthermore, the short-circuit condition controlling means 601 examines the value detected by the anomaly detection means 103, and controls the current flowing in the short-circuit means 102 (short-circuit current), the voltage in the short-circuit means 102 ( short-circuit voltage), or the resistance of the short-circuit means 102 (short-circuit resistance.)

According to this embodiment, by controlling the internal temperature and the current flowing in the short-circuit means 102, it becomes to secure the protection and safety of the storage battery and the short-circuit means 102. Especially, the control method of this embodiment is effective for the storage battery of a large capacity or the storage battery in which the charging amount is always changed.

In this figure, the anomaly detection means 103 is composed of the current detector 106 using a shunt resistor, the voltage detector 107 using a voltage dividing resistor, the temperature detector 108 using a thermistor, and the pressure detector 109 using a piezoelectric element, and the anomaly detection means 103 can detect an anomalous value in each of the current, the voltage, the temperature, and the pressure of the storage battery.

Also, the short-circuit means 102 is composed by using a MOS transistor, and it is possible to change the current flowing in the MOS transistor, the voltage between both terminals of the MOS transistor, which is determined by the product of an ON-resistance and the current flowing in the MOS transistor, and the ON-resistance by changing the gate voltage of the MOS transistor.

Furthermore, the short-circuit condition controlling means 601 consists of the reference-voltage generating device 602, the current-anomaly determining device 603, the voltage-anomaly determining device 604, the temperature-anomaly determining device 605, the pressure-anomaly determining device 606, and the short-circuit controlling unit 607.

In this embodiment, the reference-voltage generating device 602 is composed by using a reference-voltage source. Moreover, each of the current-anomaly determining device 603, the voltage-anomaly determining device 604, the temperature-anomaly determining device 605, and the pressure-anomaly determining device 606 is composed by using a differential operation amplifier, and the short-circuit controlling unit 102 is composed by using a multiplier. Therefore, the output of the multiplier changes in response to the change of the difference between the output of each detector and the reference voltage, and the gate voltage of the MOS transistor, that is, the short-circuit means 102, is changed.

Furthermore, by respectively setting a gain of each operation amplifier or a reference voltage to each amplifier, it is possible to perform the weighting for each kind of anomalies (anomalous changes of current, voltage, temperature, and pressure), or to change the priority for each of the anomalies. Thus, it becomes possible to respond to a complicated anomaly or a complicated reaction in the storage battery.

Also, it is possible to compose the reference-voltage generating device 602 by using a reference-voltage source, each of the current-anomaly determining device 603, each of the voltage-anomaly determining device 604, the temperature-anomaly determining device 605, and the pressure-anomaly determining device 606 by using a comparator, and the short-circuit controlling unit 102 by using an OR gate.

In the embodiment using the OR gate, if any one of the outputs of the detectors exceeds a reference value input from the reference-voltage generating device 602, the output of the OR gate is turned on, and it further drives the short-circuit means 102. On the other hand, if all of the outputs of the detectors decreases to values lower than their

reference values input from the reference-voltages generating device 602, the output of the OR gate is turned off, and it further turns off the short-circuit means 102.

As mentioned above, the short-circuit condition controlling unit 601 includes each state-anomaly determining device and the reference-voltage generating device 602, and if any one of signals input to the state-anomaly determining devices from the anomaly-state detectors exceeds the preset value, the short-circuit condition controlling unit 601 turns on the short-circuit means 102. Furthermore, if all of the signals decrease below their reference values, the controlling unit 601 turns off the short-circuit means 102. Therefore, although the protection function of the protection apparatus for a storage battery operate when an anomaly is detected, if the anomalous state is stabilized, the protection function is reset, and the storage battery can start its normal operation.

Thus, it becomes possible to discharge only a part of the accumulated energy and maintain the rest of the energy in the battery, which can reduce the unnecessary consumption of the accumulated energy.

For discharging only a part of the accumulated energy and maintain the rest of the energy in the battery, it is also possible to set an off-set voltage in the short-circuit means 102 or to keep the voltage of the short-circuit means at a constant value by using the short-circuit controlling unit 607.

Furthermore, by a plurality of short-circuit condition controlling units, it is also to perform multilevel protective operation: that is, to perform a protective operation by which the storage battery can restart if an anomaly of a grade lower than a predetermined level occurs, and to perform another protective operation by which the storage battery cannot restart if an anomaly of a grade higher than another predetermined level occurs.

Here, if at least two of the short-circuit means 102, the anomaly-state detectors, and the short-circuit controlling unit 607 are implemented by an IC, the protection apparatus for a storage battery can be simplified and downsized, and a fabrication cost of the protection apparatus can be also decreased.

Thus, according to the protection apparatus for a storage battery of this embodiment, it is possible to protect the storage battery apparatus 101 in all operational modes irrespective of the charge mode, the discharge mode, or the resting mode. Moreover, the operational flexibility of the storage battery apparatus 101 can also be improved.

In addition, the protection or the safety of the storage battery can be secured against a complicated anomalous state, and a unnecessary consumption of the accumulated energy can also be avoided.

Fig. 7 shows a schematic composition of a protection apparatus for a storage battery of a third embodiment according to the present invention. In this figure, numerals 701 and 702 indicate an OR gate and a differential amplifier, respectively.

Also, the reference-voltage generating device 602 is composed by using a reference-voltage source, and each of the voltage-anomaly determining device 604, the temperature-anomaly determining device 605, and the pressure-anomaly determining device 606 is composed by using a comparator.

Moreover, the short-circuit controlling unit 607 is composed by using the OR gate 701 and the differential amplifier 702. the outputs of the state-anomaly determining devices are input to the OR gate 701, and the OR logic processing are executed to these outputs. Furthermore, the output of the OR gate 701 and the output of the temperature detector 108 are input to the positive and negative input terminals of the differential amplifier 702, respectively, and the output of the differential amplifier 702 is further input to the gate of the MOS transistor of the short-circuit means 102.

According to this composition, if at least one of the voltage-anomaly determining device 604, the temperature-anomaly determining device 605, and the voltage-anomaly determining device 606 outputs an anomaly signal, the MOS transistor is turned-on, and the MOS transistor shorts the output circuits of the storage battery apparatus 101. However, if the temperature in the battery increases and the output of the temperature detector 108 becomes higher, the input voltage of the differential amplifier 702 becomes lower. Consequently, the output of the differential amplifier 702, that is, the gate voltage of the MOS transistor, becomes lower, and the current flowing in the MOS transistor decreases accordingly.

Especially, if the MOS transistor is used in the linear range, the current flowing in the transistor changes in proportion to the gate voltage. Therefore, the short-circuit current flows inversely as the temperature in the battery. Moreover, since the temperature is negatively fed back to the short-circuit current, the self-heating in the battery, which is due to the discharge, can be reduced. Thus, it becomes possible to reliably protect the storage battery against a temperature-anomaly, an over-charge anomaly, an over-current anomaly, or the application of voltage with a frequency higher than the rated level, which cause the temperature anomaly.

Also, although the temperature detector 108 is positioned in the storage battery apparatus 101, it is possible to control the current flowing in the short-circuit means 102 based on the detected changes in the temperature due to the current flowing in the short-circuit means 102 by placing the temperature detector 108 near the short-circuit means 102. Accordingly, in addition to the protection of the storage battery, it becomes possible to protect the short-circuit means 102 itself.

Fig. 8 shows the relationship between the resistance of a short-circuit means and the temperature in the short-circuit means used in the protection apparatus for a storage battery of a fourth embodiment according to the present

invention. In this figure, the resistance begins to decrease when the temperature exceeds the fist temperature T1, and becomes constant when the temperature is beyond the second temperature T2. Furthermore, the resistance begins to increase again when the temperature exceeds the third temperature T3, and becomes constant when the temperature is beyond the fourth temperature T4. Here, T1 < T2 < T3 < T4.

By using a resistor of the resistance with the above temperature-property for the short-circuit means 102, the resistance value of the short-circuit means 102 rapidly decreases beyond the temperature T1 corresponding to the temperature-anomaly level, and the accumulated energy is discharged from the storage battery apparatus 101. However, the discharge progresses, and when the temperature increases to the temperature T4 indicating the dangerous state of the storage battery apparatus 101, which is caused by the self-heating of the storage battery apparatus 101, or an further heating from the outside of the storage battery apparatus 101, the resistance value increases to the value corresponding to the open-circuit state, and the discharge is stopped. Furthermore, when the temperature in the storage battery apparatus 101 decreases again, the discharge restarts. Thus, it becomes possible to reliably protect the storage battery at the occurrence of a temperature anomaly, an over-charge anomaly, an over-current anomaly, or the application of voltage with a frequency higher than the rated level, which causes the temperature anomaly.

Also, the short-circuit means possesses a definite resistance value in the temperature range of T2 to T3. Accordingly, since the self-increase of temperature is caused by the current flowing in the short-circuit means 102, the level of current flowing in the short-circuit means 102 can be also restricted. Thus, in addition to the protection of the storage battery, it becomes possible to protect the short-circuit means 102 itself.

The above-mentioned performance of the short-circuit means 102 can be also realized by controlling the short-circuit means 102 with using the short-circuit condition controlling unit 601. Furthermore, this performance is also possible by using a component which is fabricated by integrating material such as semiconductor with a negative thermal coefficient (NTC) and material such as metal with a positive thermal coefficient (PTC.) Also, this performance can be also easily realized by using a component which is fabricated by serially connecting a NTC element and a PTC element. By using the above component, it is possible to integrate the anomaly detection means 103, the short-circuit condition controlling units unit 601, and the short-circuit means 102 in one device, which makes the protection apparatus for a storage battery smaller and simpler, and outstandingly reduces a fabrication cost of the protection apparatus.

Fig. 9 shows a schematic composition of the protection apparatus for a storage battery of a fifth embodiment according to the present invention. In this figure, numeral 901 indicates an open-circuit means.

The open-circuit means 901 is serially inserted in the terminal B 105, and the short-circuit means 102 and the anomaly detection means 103 are provided between the electrode 110, and the electrode 111 and the open-circuit means 901.

By using the above composition, even if the open-circuit means 901 is turned to the open-circuit state, the short-circuit means 102 and the anomaly detection means 103 can function.

In the state in which the storage battery apparatus 101 is connected to an eternal circuit such as a charge / discharge apparatus, if the short-circuit means 102 is turned to the short-circuit state, since the current flowing in the short-circuit means 102 increases, it is necessary to compose the short-circuit means 102 so as to have a large rated current. Moreover, a protection circuit is generally provided in an external circuit against a short-circuit in a battery to which the external circuit is connected. However, if an external circuit possesses the above protection circuit in itself against a short-circuit in the battery, the external circuit may breaks down.

Thus, by providing the open-circuit means 901, it is easily achieved to reduce the rated current of the short-circuit means 102 and to protect an external circuit against a short-circuit in the storage battery apparatus 101 to which the external circuit is connected.

Furthermore, similarly to the embodiment shown in Fig. 6, by inserting the short-circuit condition controlling unit 601 between the short-circuit means 102 and the anomaly detection means 103, it is possible to respond to a complicated anomaly and a complicated reactions in the storage battery, which can secure the protection and the safety of the storage battery apparatus 101, and also avoid an unnecessary consumption of the accumulated energy.

Thus, according to the protection apparatus for a storage battery of this embodiment, it is possible to protect the storage battery apparatus 101 and an external circuit in all operational modes irrespective of the charge mode, the discharge mode, or the resting mode.

Moreover, it is possible to protect the storage battery apparatus 101 against a complicated anomalous state occurring in the storage battery apparatus 101 or an external circuit, and to also avoid an unnecessary consumption of the accumulated energy.

Fig. 10 shows a schematic composition of a total system including the protection apparatus for a storage battery of a sixth embodiment according to the present invention and external systems sending power to or receiving power from the battery. In this figure, numerals 1001, 1002, and 1003 indicate a charge / discharge apparatus, a connected system switching unit, an AC power source, respectively. Moreover, numerals 1004 and 1005 indicate a load system and an inverter / converter unit.

The charge / discharge apparatus 1001 is mainly composed of the inverter / converter unit 1005, the short-circuit means 102, the open-circuit means 901, the voltage detector 107, the current detector 106, and the short-circuit condition controlling unit 607.

Also, one terminal circuit of the charge / discharge apparatus 1001 is connected to the AC power source 1003 and the load system 1004 via the connected system switching unit 1002. The other terminal circuit of the apparatus 1001 is further connected to the storage battery apparatus 101.

When the storage battery apparatus is charged, firstly, the connected system switching unit 1002 electrically disconnects the load system 1004, and connects the AC power source 1003 and the charge / discharge apparatus 1001.

Next, the input AC power is converted to DC power by the inverter / converter apparatus 1001. In this figure, the inverter / converter apparatus 1001 is composed of four IGBTs, four fly-wheel diodes, a reactor, and a smoothing capacitor, and it converts the input AC power to DC power by using a rectifying circuit consisting of the fly-wheel diodes and the rectifying function of the PWM converter in which higher harmonic components due to the AC power are smoothed.

The voltage of the converted DC power is decreased to the rated voltage of the storage battery apparatus 101 by using the open-circuit means 901, the short-circuit means 101, and the reactor, and the storage battery apparatus 101 is charged by the obtained DC of which the voltage is decreased.

When decreasing the voltage of the DC power, in the short-circuit means 102 composed of the IGBTs and the fly-wheel diodes, the IGBTs are always turned off, and the fly-wheel diodes are alternately turned on and off. On the other hand, in the open-circuit means 901 composed of the IGBTs and the fly-wheel diodes, the IGBTs are alternately turned on and off, and the fly-wheel diodes are always turned off. That is, the short-circuit and open-circuit means 102 and 901 function as a voltage decreasing chopper for decreasing the voltage to the rated voltage of the storage battery apparatus 101.

Moreover, the voltage detector 107 and the current detector 106 are also used to check for whether or not the charge voltage and current match the rated values of the storage battery apparatus 101, and to feed back the result of the check to the chopping operation for the voltage-decreasing.

Furthermore, the short-circuit controlling unit 607 controls the switching operation of the connected system switching unit 1002, the function of the PWM converter in the inverter / converter 1005, the chopping operation for the voltage-decreasing performed by the short-circuit and open-circuit means 102 and 901, in addition to controlling the short-circuit and open-circuit conditions.

On the other hand, in the discharge mode, the connected system switching unit 1002 electrically disconnects the AC power source 1003, and connects the load system 1004 and the charge / discharge apparatus 1001.

Moreover, the output voltage of the storage battery apparatus 101 is increased to a required value in the load system 1004 by using the short-circuit and open-circuit means 102 and 901, and the reactor, the output DC power is inverted to AC power used in the load system 1004 by the inverter / converter unit 1005.

In increasing the voltage, the IGBTs in the open-circuit means 901 are always turned off, and the fly-wheel diodes are alternately switched on and off. On the other hand, the IGBTs in the short-circuit means 102 are alternately switched on and off, and the fly-wheel diodes are always turned off. That is, the short-circuit and open-circuit means 102 and 901 function as a voltage increasing chopper for increasing the voltage to a required voltage used in the load system too.

Moreover, the voltage detector 107 and the current detector 106 are also used to check for whether the charge voltage and current matches the required values used in the load system 1004 and feed-back the result of the check to the chopping operation for voltage-increasing.

Furthermore, in addition to controlling the short-circuit and open-circuit conditions, the short-circuit controlling unit 607 controls the switching operation of the connected system switching unit 1002, the PWM inverter function in the inverter / converter 1005, the chopping operation for voltage-increasing performed by the short-circuit 102 and the OR gate 701.

Lastly, in the resting state of the charge / discharge apparatus 1001, the connected system switching unit 1002 connects the AC power source 1003 and the load system 1004, and disconnects the load system 1004 from the charge / discharge apparatus 1001. Thus, power is fed to the load system 1004 from the AC power source.

In another case, the connected system switching unit 1002 separates the AC power source 1003, the load system 1004, and the charge / discharge apparatus 1001, from each other. Thus, all the system and the apparatuses are turned in the resting state.

Here, the short-circuit controlling unit 607 can performs all the above-explained controls only by itself.

In each operational mode of the system shown in Fig. 10, if an anomaly occurs in the input / output part of the storage battery apparatus 101, the open-circuit means is first turned to the open-circuit state in which the external system is disconnected from the storage apparatus 101. Accordingly, the storage battery apparatus 101 and the external system can be protected.

In the above situation, it is preferable that the inverter / converter unit 1005 is turned off from the point of view

of saving power. However, if it is not desirable to immediately stop the load system 1004, the load system 1004 can be operated by the inverter / converter unit 1005 while using the power stored in the smoothing capacitor for a definite period. Moreover, during the operation of the load system 1004 carried out by using the power stored in the smoothing capacitor, it is possible to first connect the AC power source 1003 and the load system 1004, next disconnect the load system 1004 from the charge / discharge apparatus 1001, and operate the load system 1004 with the AC power source 1003, with a sufficient margin of time.

Thus, the reliability of the total system can be improved.

On the other hand, if an anomaly occurs inside the storage battery apparatus 101, the short-circuit means 102 shorts the output circuit of the storage battery apparatus 101 to discharge the energy accumulated in the storage battery apparatus 101. Thus, it becomes possible to secure the protection or the safety of the storage battery apparatus 101 without causing the highly dangerous accident such as a rupture or an explosion.

Furthermore, the short-circuit condition controlling unit 607 which supervises controlling of the total system and the short-circuit conditions can discharge a part of the energy accumulated in the storage battery apparatus 101 and store the rest by controlling the short-circuit means 102 according to the kind of anomaly (anomalous changes of current, voltage, temperature, frequency, and pressure, etc.,) the weight or the priority assigned to each kind of anomalies. Thus, an unnecessary consumption of the accumulated energy can be reduced while securing the protection or the safety of the storage battery apparatus 101.

Thus, according to the protection apparatus for a storage battery of this embodiment, it is possible to protect the storage battery apparatus 101 and the external systems in all operational modes irrespective of the charge mode, the discharge mode, or the resting mode, and to also improve the reliability of the total system.

Moreover, it is also possible to secure the protection or the safety against a complicated anomaly occurring in the storage battery apparatus 101 or the external systems, and to further reduce an unnecessary consumption of the accumulated energy.

Furthermore, in this embodiment, the short-circuit means 102, the anomaly detection means 103, the short-circuit controlling unit 607, and the OR gate 701 are commonly used as a part of the composition of the charge / discharge apparatus 1001. Therefore, the number of parts or the size of circuits is decreased, and it is also possible to downsize the system and to reduce the cost of fabricating the system.

Fig. 11 shows a schematic composition of the protection apparatus for a storage battery of a seventh embodiment according to the present invention. In this figure, numeral 1101 indicate a Zener diode. Also, the terminal A 104 and the terminal B 105 are used as the positive and negative electrode terminals, respectively. The cathode and anode terminals of the Zener diode 1101 are connected to the terminals A 104 and B 105, respectively.

The Zener diode 1101 functions as a diode in the range of a definite negative voltage to a definite positive voltage, and both the terminals of this diode are shorted outside the range. Each boundary voltage in the above range is called the break-down voltage inside which the diode function as a diode and outside which the diode is turned to the short-circuit state.

Therefore, if the break-down voltage of the Zener diode 1101 is set to the over-voltage level, this Zener diode 1101 can perform all the anomaly-voltage detection, the short-circuit, and the setting function of short-circuit conditions, only by itself.

Thus, it is possible to short both the terminals A 104 and B 105, bypass the energy input into the storage battery apparatus 101, and maintain the safe voltage while discharging the accumulated energy, even if the anomaly of over-voltage occurs in all operational modes irrespective of the charge mode, the discharge mode, or the resting mode.

Thus, according to the protection apparatus for a storage battery of this embodiment, it is possible to substantially protect the storage battery apparatus 101 and secure the safety in all operational modes irrespective of the charge mode, the discharge mode, or the resting mode.

Moreover, all of the anomaly-voltage detection, the short-circuit, and the short-circuit condition setting can be implemented by one Zener diode, which decreases the number of parts and circuits and reduce the cost of fabricating the protection apparatus.

Fig. 12 shows a schematic composition of the protection apparatus for a storage battery of an eighth embodiment according to the present invention. In this figure, numeral 1201 indicates a piezoelectric actuator. The piezoelectric actuator 1201 is inserted between the terminals A 104 and B 105.

The piezoelectric actuator 1201 is composed of a piezoelectric element and a switch. This piezoelectric element expands or contracts in a definite direction when voltage is applied to this element. The switch is opened or closed according to this expansion or contraction of the piezoelectric element. Therefore, in this embodiment, the direction and the amount of expansion or contraction of this element is set so that the switch is closed if the voltage of the storage battery apparatus 101 exceed the over-voltage level.

By setting the direction and the amount of expansion or contraction of this element as mentioned above, the piezoelectric actuator 1201 shorts both the terminals A 104 and B 105 if the voltage of the storage battery apparatus 101 exceed the over-voltage level, otherwise, it does not shorts both the electrodes. Also, the piezoelectric actuator

1201 can perform all of the anomaly-voltage detection, the short-circuit, and the setting function of short-circuit conditions.

Thus, the piezoelectric actuator 1201 shorts both the terminals A 104 and B 105, bypasses the energy input into the storage battery apparatus 101, and maintains the safe voltage while discharging the accumulated energy, even if the anomaly of over-voltage occurs in all operational modes irrespective of the charge mode, the discharge mode, or the resting mode.

Thus, according to the protection apparatus for a storage battery of this embodiment, it is possible to substantially protect the storage battery apparatus 101 and secure the safety in all operational modes irrespective of the charge mode, the discharge mode, or the resting mode.

Moreover, all of the anomaly-voltage detection, the short-circuit, and the setting function of short-circuit conditions can be implemented by one Zener diode, which decreases the number of parts and circuits and reduce the cost of fabricating the protection apparatus.

Fig. 13 shows a schematic composition of the protection apparatus for a storage battery of a ninth embodiment according to the present invention. In this figure, numeral 1301 indicates a converting device for converting current to voltage.

The converting device 1301 and the open-circuit means 901 are serially inserted in the terminal B 105, and the short-circuit means 102 is provided between the open-circuit means 901 and the terminal B 105, and the terminal A 104. Moreover, the open-circuit means 901 is driven according to the output of the converting device 1301.

Naturally, it is possible to insert the converting device 1301 in the terminal A 104.

The converting device 1301 is composed of a resistor and an amplifier for amplifying the voltage generated by current flowing in the resistor. Also, as the converting device 1301, it is possible to use an element capable of converting current to voltage such as a current transformer or a Hall generator. If the converting device 1301 cannot output the driving voltage necessary to drive the open-circuit means 901, the open-circuit means 901 can be easily driven by increasing the converted voltage with an amplifier.

Moreover, the short-circuit and open-circuit means 102 and 901 are respectively composed by using a piezoelectric actuator. The piezoelectric actuator used as the short-circuit can change the short-circuit resistance by changing the deforming amount due to the voltage applied to the piezoelectric actuator.

If the input or output current of the storage battery apparatus 101 reaches the anomalous level, the current value is converted to the voltage value, and the voltage capable of turning off the piezoelectric actuator 1301 is applied to the actuator 1301. Thus, the storage battery apparatus 101 is electrically disconnected from external circuits, and protected.

Furthermore, if the voltage of the storage battery apparatus 101 exceeds the over-voltage level, the short-circuit means 102 shorts both the terminals A 104 and B 105, and if voltage of the storage battery apparatus 101 again decreases under the over-voltage level, the short-circuit means 102 stops the short-circuit operation. Thus, the storage battery apparatus 101 is protected, and its safety is secured. Moreover, the short-circuit resistance is automatically set to a predetermined optimal value determined according to the deforming amount of the piezoelectric actuator, that is, according to the voltage applied between the terminals A 104 and B 105. Accordingly, it is realized to protect the storage battery apparatus 101 more adequately and safely.

Thus, according to the protection apparatus for a storage battery of this embodiment, it is possible to substantially protect the storage battery apparatus 101 and secure the safety in all operational modes irrespective of the charge mode, the discharge mode, or the resting mode. Moreover, it can be realized to decreases the number of parts and circuits and reduce the cost of fabricating the protection apparatus.

Furthermore, since the piezoelectric actuator performs the voltage detection, the short-circuit operation, and the setting function of short-circuit conditions, and changes the short-circuit resistance, the optimal and safe protection can be realized.

Fig. 14 shows a schematic composition of the protection apparatus for a storage battery of a tenth embodiment according to the present invention. In this figure, numeral 1401 is a NTC element. This NTC element 1401 is inserted between both the terminals A 104 and B 105.

The resistance of the NTC element 1401 decreases when its temperature increases. Here, it is possible to select the NTC element 1401 such that if the temperature in the storage battery apparatus 101 exceeds a permitted level, its resistance decrease, the terminals A 104 and B 105 are shorted with the resistance which has optimally changed. Accordingly, the protection to the high temperature can be attained. Also, the NTC element 1401 can perform all of the temperature detection, the short-circuit operation, and the setting function of short-circuit conditions, and further continuously change the short-circuit resistance according to its temperature.

Since the NTC element 1401 is an element sensitive to temperature, it does not need the external energy. Also, the NTC element 1401 can realize the protection of the storage battery apparatus 101 to the high temperature in all operational modes irrespective of the charge mode, the discharge mode, or the resting mode.

Thus, according to the protection apparatus for a storage battery of this embodiment, it is possible to protect

the storage battery apparatus 101 against the high temperature and secure its safety in all operational modes irrespective of the charge mode, the discharge mode, or the resting mode.

Also, the NTC element 1401 can perform all of the temperature detection, the short-circuit operation, and the setting function of short-circuit conditions, and further continuously change the short-circuit resistance, which can decrease the number of parts and circuits, and reduce a fabrication cost of the storage battery apparatus 101.

Fig. 15 shows a schematic composition of the protection apparatus for a storage battery of an eleventh embodiment according to the present invention. In this figure, numeral 1501 is a bimetallic element. The bimetallic element 1501 is inserted between both the terminals A 104 and B 105.

The bimetallic element 1501 is a multi-layer-metal element fabricated by sticking metal layers with different thermal expansion coefficients, and it changes its shape in response to its temperature. Accordingly, it is possible to select the bimetallic element 1501 such that if the temperature in the storage battery apparatus 101 exceeds a permitted level, the element 1501 shorts the terminals A 104 and B 105 by changing its shape, and the short-circuit resistance is optimally changed. Also, the bimetallic element 1501 can perform all of the temperature detection, the short-circuit operation, and the setting function of short-circuit conditions, and further continuously change the short-circuit resistance.

Although the bimetallic element 1501 is connected to the terminal B 105 in Fig. 15, it is naturally possible to connect the bimetallic element 1501 to the terminal A 104.

Since the bimetallic element 1501 is an element sensitive to temperature, it does not need the external energy. Also, the bimetallic element 1401 can realize the protection of the storage battery apparatus 101 against the high temperature in all operational modes irrespective of the charge mode, the discharge mode, or the resting mode.

Thus, according to the protection apparatus for a storage battery of this embodiment, it is possible to protect the storage battery apparatus 101 against the high temperature and secure its safety in all operational modes irrespective of the charge mode, the discharge mode, or the resting mode.

Also, the bimetallic element 1501 can perform all of the temperature detection, the short-circuit operation, and the setting function of short-circuit conditions, and further continuously change the short-circuit resistance, which can decrease the number of parts and circuits, and reduce a fabrication cost of the storage battery apparatus 101.

Fig. 16 shows a schematic composition of the protection apparatus for a storage battery of a twelfth embodiment according to the present invention.

The open-circuit means 901 is serially inserted in the terminal B 105, and the short-circuit means 102 is provided between the open-circuit means 901 and the terminal B 105, and the thermal A 104. The open-circuit and short-circuit means 901 and 102 are respectively composed by using a bimetallic element. Here, it is possible to select these bimetallic elements such that if the temperature in the storage battery apparatus 101 exceeds a permitted level, the elements shorts the terminals A 104 and B 105 or open the output circuit of the terminals A 104 and B 105 by changing their shapes, and the short-circuit resistance is optimally changed. Also, the bimetallic elements can perform all of the temperature detection, the short-circuit operation, and the setting function of short-circuit conditions, and further continuously change the short-circuit resistance.

Moreover, by adjusting the resistance of the open-circuit means 901 so that the heat generation due to current flowing in the open-circuit means 901, the increase of its temperature, and the deformation amount of the bimetallic element are optimized, it is possible to protect the storage battery apparatus 101 against an over-current anomaly.

Since the bimetallic elements are an element sensitive to temperature, they do not need the external energy. Also, the bimetallic elements can realize the protection of the storage battery apparatus 101 and external circuits to a high temperature anomaly and an over-current anomaly in all operational modes irrespective of the charge mode, the discharge mode, or the resting mode.

Although the open-circuit means 901 is provided in the terminal B 105 in Fig. 16, it is naturally possible to provide the open-circuit means 901 in the terminal A 104.

Thus, according to the protection apparatus for a storage battery of this embodiment, it is possible to protect the storage battery apparatus 101 and external circuits against a high temperature anomaly and an over-current anomaly, and secure the safety in the apparatus and the external circuits in all operational modes irrespective of the charge mode, the discharge mode, or the resting mode. Furthermore, it is possible to decrease the number of parts and circuits, and reduce a fabrication cost of the storage battery apparatus 101.

Also, the bimetallic elements can perform all of the temperature detection, the short-circuit operation, and the setting function of short-circuit conditions, and further continuously change the short-circuit resistance. Accordingly, the optimal and safe protection can be realized.

Fig. 17 shows a schematic composition of the protection apparatus for a storage battery of a thirteenth embodiment according to the present invention. In this figure, numeral 1701 indicates a pressure-switch.

The pressure-switch 1701 consists of a member changing its shape according to the pressure change, a switch composing the open-circuit means 901, and a switch composing the short-circuit means 102 provided between and the terminals A 104 and B 105.

This pressure-switch 1701 opens the terminal B 105 and shorts the terminals A 104 and B 105 if the pressure in the storage battery apparatus 101 exceeds a permitted level. Thus, it is possible to attain the protection of the storage battery apparatus 101 and external circuits to the high internal pressure. Also, the pressure-switch 1701 can perform all of the temperature detection, the short-circuit operation, and the setting function of short-circuit conditions.

The pressure necessary for the short-circuit or open-circuit operation can be arbitrarily set by changing material used as the member in the pressure switch 1701 and the displacement of the switches.

Furthermore, the pressure switch 1701 can operate independently, and it is possible to protect the storage battery apparatus 101 against a high internal pressure anomaly in all operational modes irrespective of the charge mode, the discharge mode, or the resting mode.

Although the open-circuit means 901 is provided in the terminal B 105 in Fig. 17, it is naturally possible to provide the open-circuit means 901 in the terminal A 104.

Thus, by using the protection apparatus for a storage battery of this embodiment, the storage battery apparatus 101 and external circuits can be protected against a high internal pressure anomaly, and the safety of the apparatus and the external circuits can be secured in all operational modes irrespective of the charge mode, the discharge mode, or the resting mode. Moreover, the number of parts and circuits can be decreased, and a fabrication cost of the storage battery apparatus 101 can be also reduced.

Fig. 18 shows a schematic composition of the protection apparatus for a storage battery of a fourteenth embodiment according to the present invention. In this figure, numerals 1801 and 1802 indicate short-circuit terminal sheets A and B, respectively. Moreover, the short-circuit terminal sheets A and B are connected to the terminals A 104 and B 105, respectively. Furthermore, the sheets possesses their shapes such that they sandwich each other vertically or horizontally via a spacing interval.

Accordingly, when an anomalous stress is caused by the strong external force applied to the storage battery apparatus 101, the shapes of the short-circuit terminal sheets A and B are changed, and the terminals A 104 and B 105 are shorted.

The stress level for the short-circuit operation of the sheets A and B can be arbitrarily set by adjusting the strength of the short-circuit terminal sheets A and B and the spacing interval.

Since the above-explained composition does not need the external energy for shorting both the terminals A 104 and B 105, it is possible to realize the protection of the storage battery apparatus 101 to an anomalous stress in all operational modes irrespective of the charge mode, the discharge mode, or the resting mode.

Thus, according to the protection apparatus for a storage battery of this embodiment, it is possible to protect the storage battery apparatus 101 and external circuits against an anomalous stress, and secure the safety in the apparatus and the external circuits in all operational modes irrespective of the charge mode, the discharge mode, or the resting mode. Furthermore, it is possible to decrease the number of parts and circuits, and reduce a fabrication cost of the storage battery apparatus 101.

As mentioned above, in accordance with the protection apparatus for a storage battery of the present invention, it is possible to protect the storage battery apparatus 101 and external circuits, and secure the safety in the apparatus and the external circuits in all operational modes irrespective of the charge mode, the discharge mode, or the resting mode. Moreover, while the protection apparatus for a storage battery and the battery can be repeatedly used after the anomaly was stabilized, the safety can be also improved. Accordingly, the reliability of a total system using this protection apparatus for a storage battery can be also greatly improved.

Also, by discharging the accumulated energy as a little as possible in the protective operation, the efficient protection can be realized, and it is also possible to correspond to a complicated anomaly occurring in the storage battery apparatus 101 and external circuits.

Furthermore, by using a voltage sensing element or a temperature sensing element, it becomes to commonly using the short-circuit means, the anomaly detection means, the short-circuit condition controlling unit, and the open-circuit means as a part of the charge / discharge apparatus, can be commonly implemented, which can decrease the number of parts and of circuits, and reduce the size of the storage battery apparatus 101 and its fabrication cost.

In addition, the safety is reliably secured, and the operational flexibility is greatly improved by the simplification of the protection apparatus.

Especially, the protection apparatus for a storage battery according to the present invention is effective for a storage battery such as a lithium secondary battery or an electric double layer capacitor for which the reliable protection and the high safety is required, a storage battery which is separately used, and a total system using a storage battery for which the high reliability is required.

## Claims

**1.** Protection apparatus for storage battery for storing and feeding power, said protection apparatus comprising:

anomaly detection means (103) for detecting an anomalous state in at least one of the voltage, a current flow, and the frequency in at least one of an input power and an output power of said storage battery, the temperature and the pressure in said storage battery, and an external force applied to said storage battery; and

short-circuit means (102) for shorting both electrodes (104, 105) of said storage battery when an anomaly is detected in at least one of said input power, said output power, and said storage battery.

**2.** Protection apparatus according to claim 1, further comprising a short-circuit condition controlling unit (607) for controlling at least one of a short-circuit current flow, the voltage, and a short-circuit resistance between both said electrodes (104, 105).

**3.** Protection apparatus according to claim 2, wherein said short-circuit condition controlling unit controls said short-circuit current flow between said electrodes inversely as the temperature of one of said storage battery and said short-circuit means.

**4.** Protection apparatus according to claim 2, wherein said short-circuit condition controlling unit controls so that said electrodes is shorted if the temperature of at least one of said storage battery and said short-circuit means exceeds a first level, and an open-circuit operation for said electrodes is performed if the temperature of at least one of said storage battery and said short-circuit means exceeds a second level higher than said first level.

**5.** Protection apparatus according to claim 2, wherein said short-circuit condition controlling unit controls so that an open-circuit operation for said electrodes is performed if said short-circuit current flow exceeds a predetermined level.

**6.** Protection apparatus according to one of claim 1 and claim 2, further including open-circuit means (901) for disconnecting an external system from said storage battery according to an anomalous state detected in at least one of said input power, said output power, and said storage battery.

**7.** Protection apparatus according to one of claim 1 and claim 2, said protection apparatus being incorporated in a charge / discharge apparatus (1001).

**8.** Protection apparatus according to claim 1, wherein a Zener diode (1101) is used commonly for said anomaly detection means for detecting an anomalous state in the voltage of said storage battery and said short-circuit means for shorting said electrodes, said short-circuit means further controlling said short-circuit current flow between said electrodes.

**9.** Protection apparatus according to claim 1, in which a piezoelectric actuator (1201) is used for said short-circuit means, wherein said short-circuit means performs a short-circuit operation for said electrodes based on the voltage of said storage battery in an anomalous voltage state occurring in said storage battery, opens a circuit between said electrodes if said voltage is lower a predetermined level, and shorts said electrodes if said voltage is higher a predetermined level.

**10.** Protection apparatus according to claim 1, in which a piezoelectric actuator is used for said anomaly detection means, wherein said anomaly detection means includes a resistor to convert current flowing in said electrodes to voltage, and performs disconnection / connection between an external system and said storage battery based on said current converted to said voltage in an anomalous current state.

**11.** Protection apparatus according to claim 1, wherein a NTC (negative temperature coefficient) element (1401) is used for said short-circuit means functioning in an anomalous temperature state occurring in said storage battery.

**12.** Protection apparatus according to claim 2, wherein said short-circuit means includes a NTC element and a PTC (positive thermal coefficient) serially connected to each other to control said short-circuit current flow between said electrodes based on the temperature of one of said storage battery and said short-circuit means.

**13.** Protection apparatus according to claim 1, wherein a bimetallic element (1501) is used for said short-circuit means functioning in an anomalous temperature state occurring in said storage battery.

**14.** Protection apparatus according to claim 6, wherein a bimetallic element is used for said short-circuit means and said open-circuit means, said short-circuit means shorting said electrodes if the temperature of said storage battery

is lower than a predetermined level and said open-circuit means disconnecting an external circuit from said storage battery if the temperature of said storage battery is higher than a predetermined level in an anomalous temperature state occurring in said storage battery.

**15.** Protection apparatus according to claim 1, in which a pressure switch (170) is used for said short-circuit means which shorts said electrodes if the pressure in said storage battery is higher a predetermined level, and used for open-circuit means which disconnects an external circuit from said storage battery if said pressure is lower a predetermined level, in an anomalous pressure state occurring in said storage battery.

**16.** Protection apparatus according to claim 1, wherein said short-circuit means includes first and second groups of short-circuit terminal sheets (1802A, B) connected to the positive and negative electrodes, respectively, each sheet of said first group and each sheet of said second group alternately sandwiching each other vertically or horizontally via a predetermined spacing interval, whereby said electrodes are shorted when an anomalous stress occurs in said storage battery.

*FIG.1*

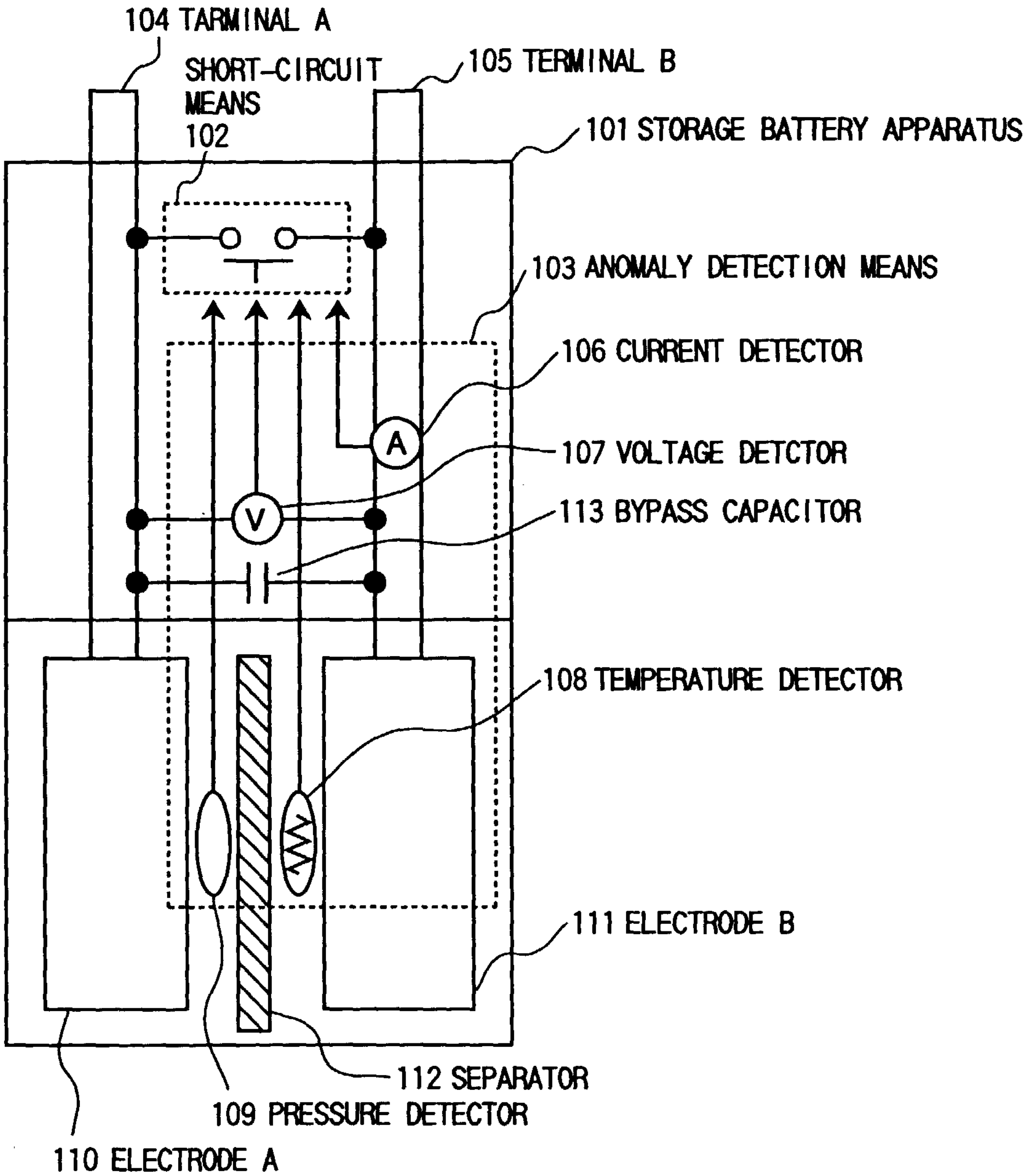
104 TARMINAL A
SHORT-CIRCUIT MEANS 102
105 TERMINAL B
101 STORAGE BATTERY APPARATUS
103 ANOMALY DETECTION MEANS
106 CURRENT DETECTOR
A
107 VOLTAGE DETCTOR
V
113 BYPASS CAPACITOR
108 TEMPERATURE DETECTOR
111 ELECTRODE B
112 SEPARATOR
109 PRESSURE DETECTOR
110 ELECTRODE A

FIG.2

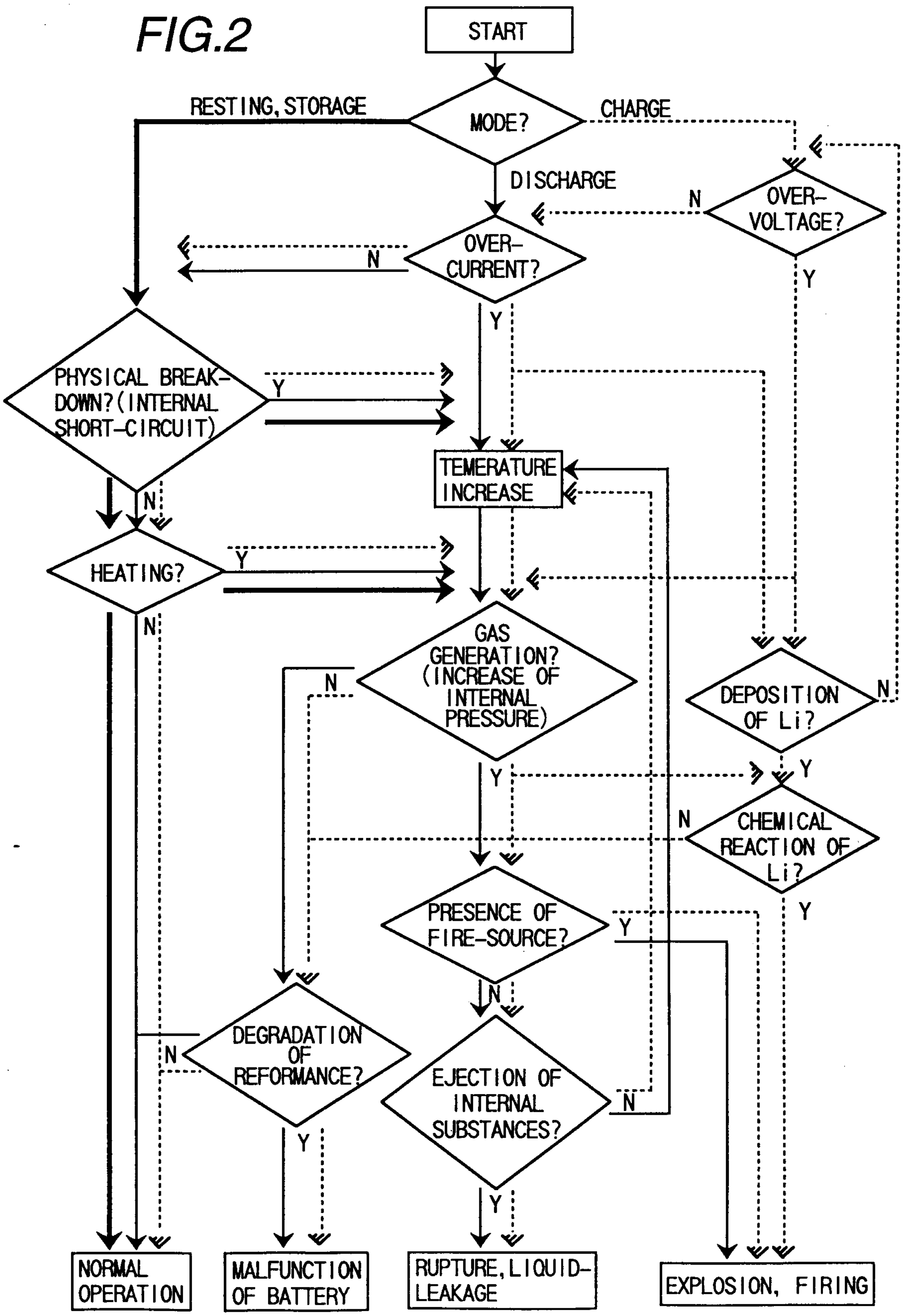
START
MODE?
RESTING, STORAGE
CHARGE
DISCHARGE
OVER-VOLTAGE?
N
Y
OVER-CURRENT?
N
Y
PHYSICAL BREAK-DOWN? (INTERNAL SHORT-CIRCUIT)
Y
N
TEMERATURE INCREASE
HEATING?
Y
N
GAS GENERATION? (INCREASE OF INTERNAL PRESSURE)
N
Y
DEPOSITION OF Li?
N
Y
CHEMICAL REACTION OF Li?
N
Y
PRESENCE OF FIRE-SOURCE?
Y
N
DEGRADATION OF REFORMANCE?
N
Y
EJECTION OF INTERNAL SUBSTANCES?
N
Y
NORMAL OPERATION
MALFUNCTION OF BATTERY
RUPTURE, LIQUID-LEAKAGE
EXPLOSION, FIRING

FIG.3

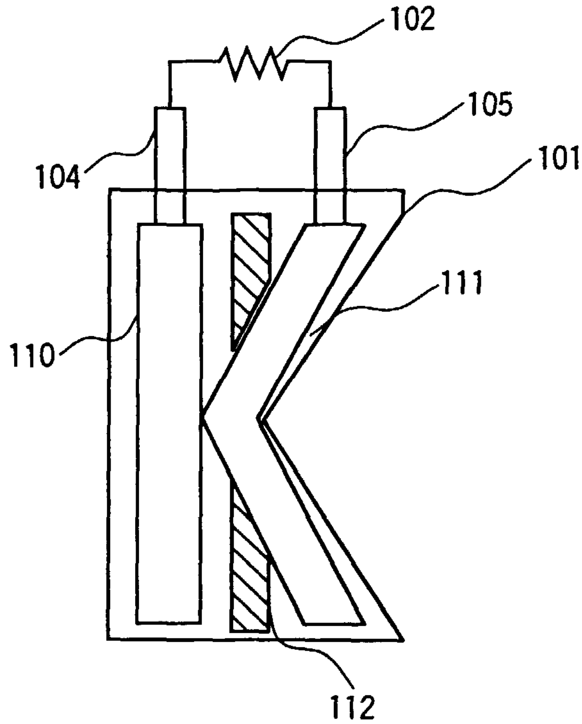


FIG.4

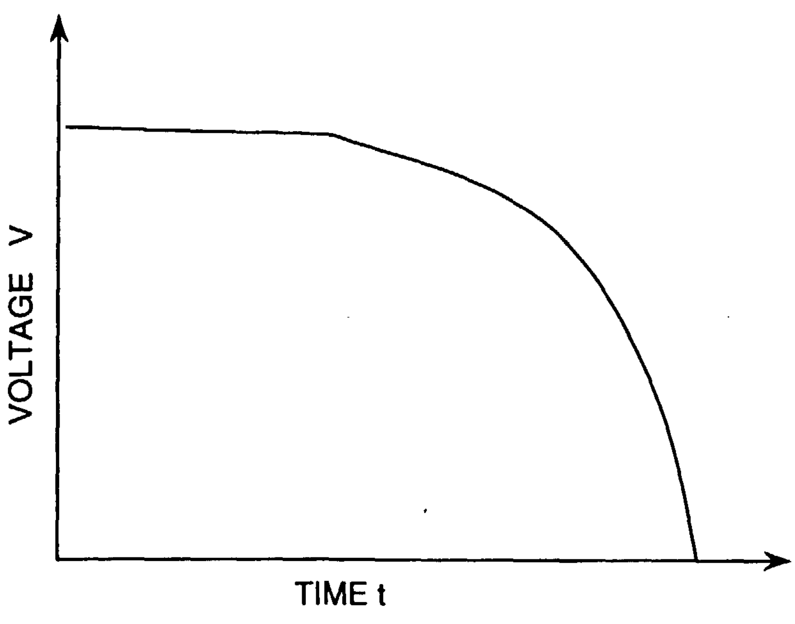

FIG.5

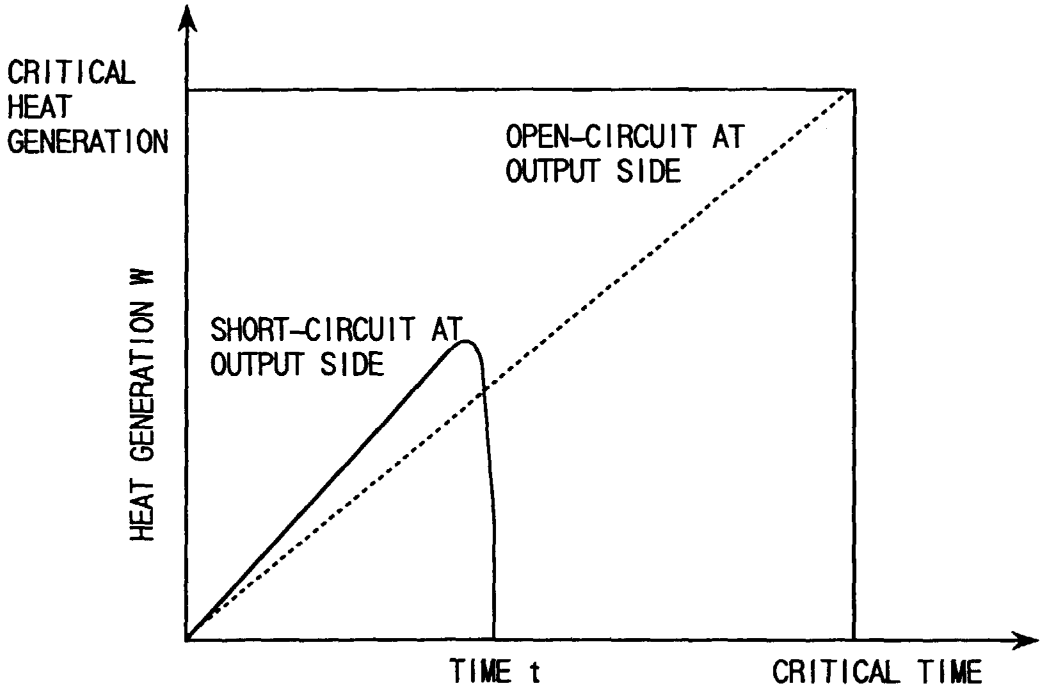
CRITICAL
HEAT
GENERATION
HEAT GENERATION W
OPEN-CIRCUIT AT
OUTPUT SIDE
SHORT-CIRCUIT AT
OUTPUT SIDE
TIME t
CRITICAL TIME

FIG.8

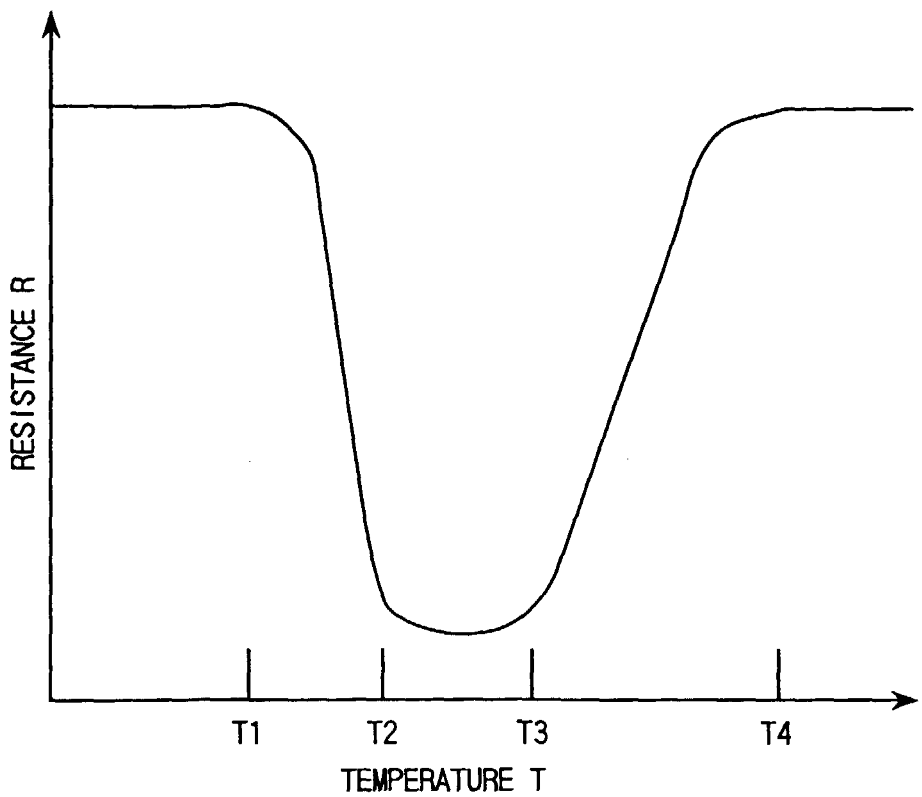
RESISTANCE R
T1
T2
T3
T4
TEMPERATURE T

FIG.6

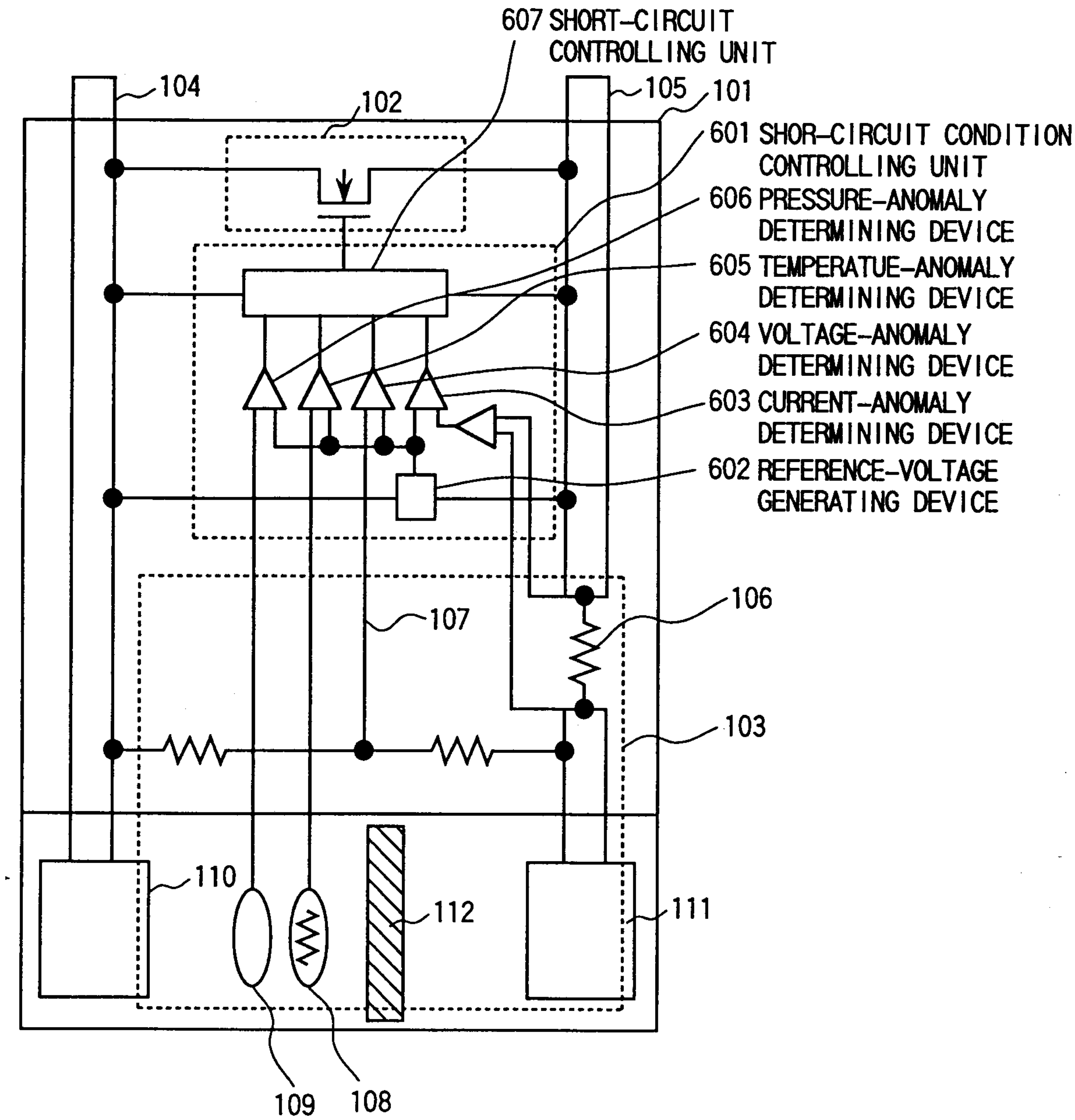
607 SHORT-CIRCUIT CONTROLLING UNIT
104
102
105
101
601 SHOR-CIRCUIT CONDITION CONTROLLING UNIT
606 PRESSURE-ANOMALY DETERMINING DEVICE
605 TEMPERATUE-ANOMALY DETERMINING DEVICE
604 VOLTAGE-ANOMALY DETERMINING DEVICE
603 CURRENT-ANOMALY DETERMINING DEVICE
602 REFERENCE-VOLTAGE GENERATING DEVICE
106
107
103
110
112
111
109
108

FIG.7

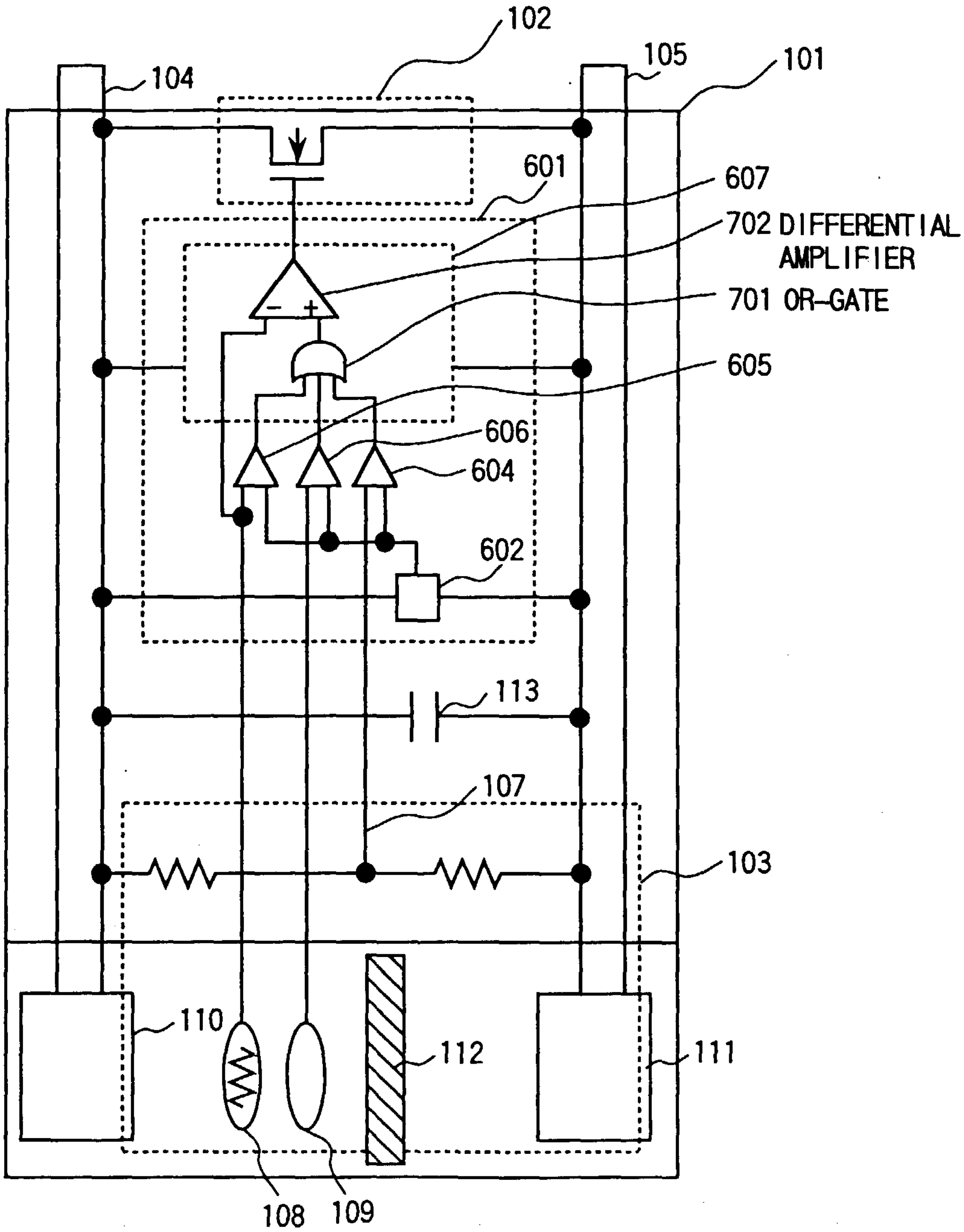
102
104
105
101
601
607
702 DIFFERENTIAL AMPLIFIER
701 OR-GATE
605
606
604
602
113
107
103
110
112
111
108
109

FIG.9

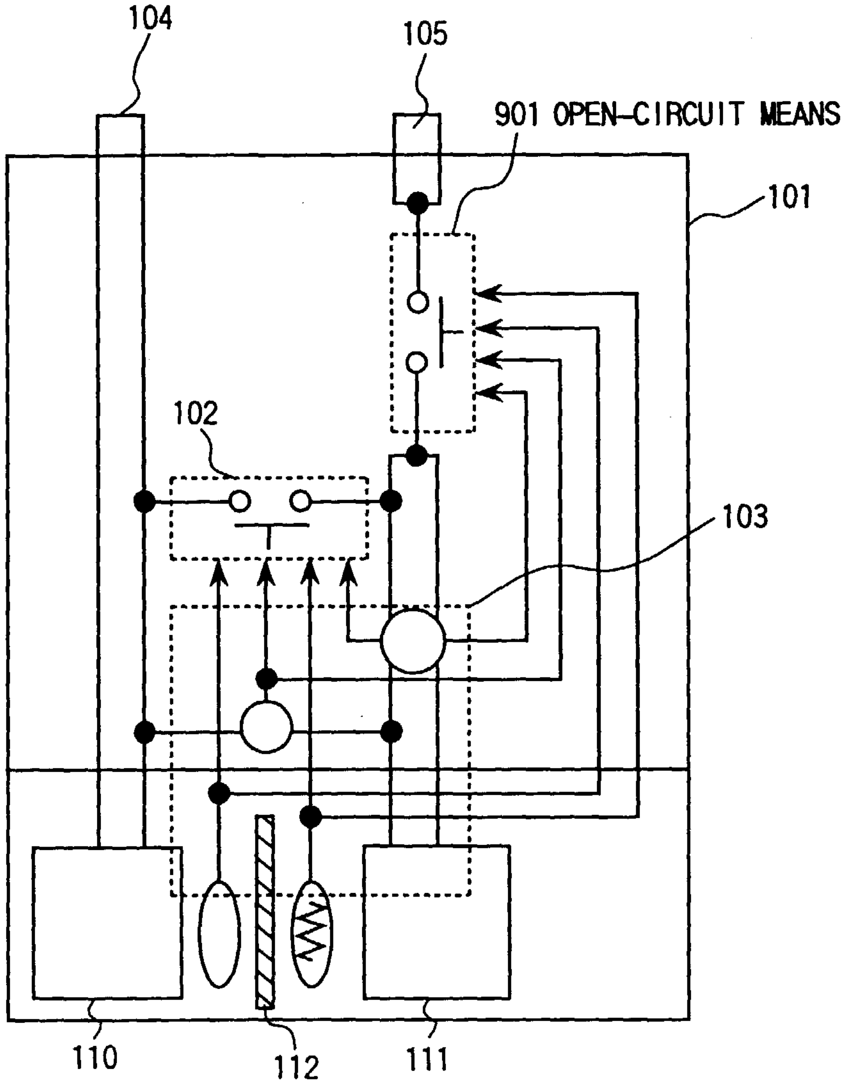

FIG.10

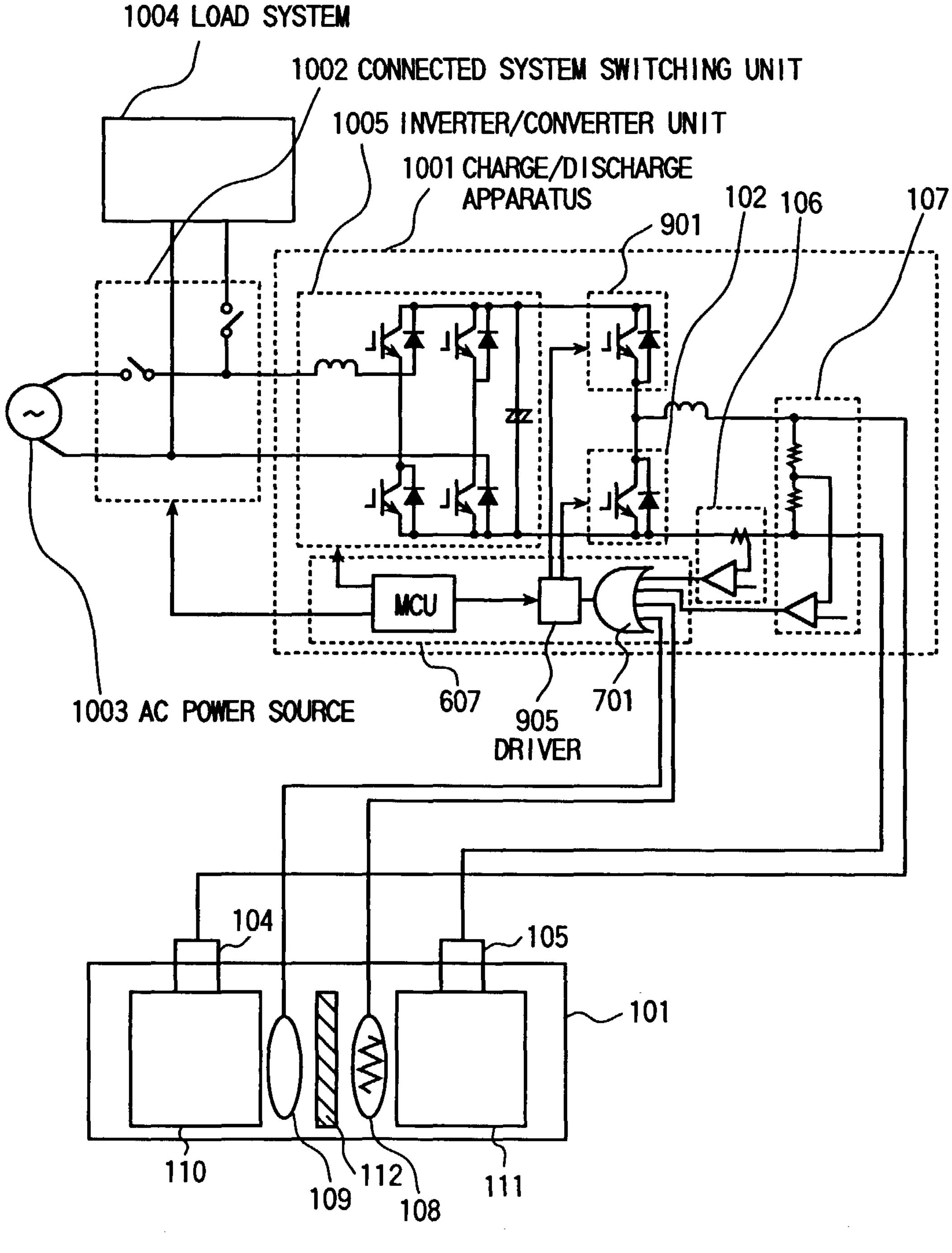


MCU:MAIN CONTROL UNIT

FIG.11

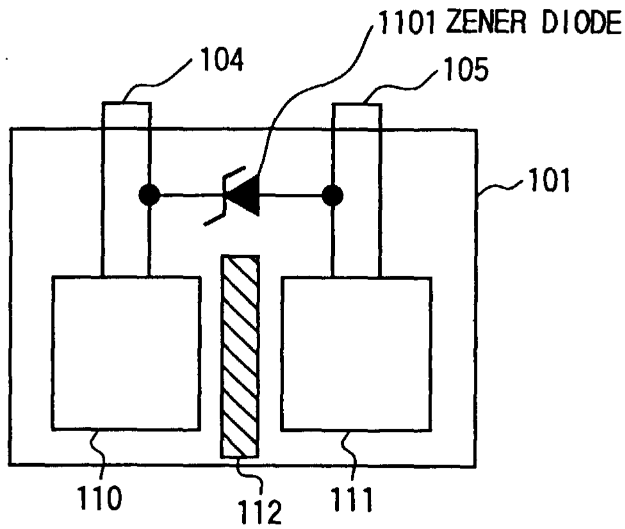
1101 ZENER DIODE
104
105
101
110
112
111

FIG.12

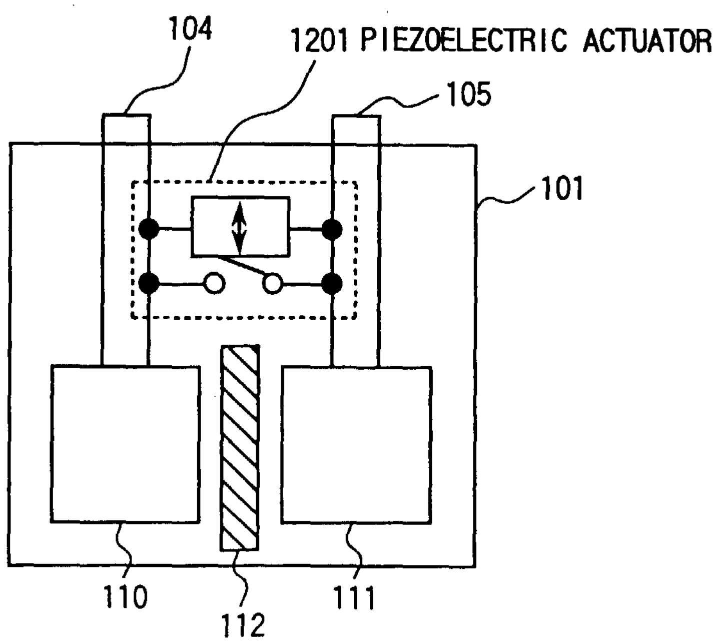
104
1201 PIEZOELECTRIC ACTUATOR
105
101
110
112
111

*FIG.13*

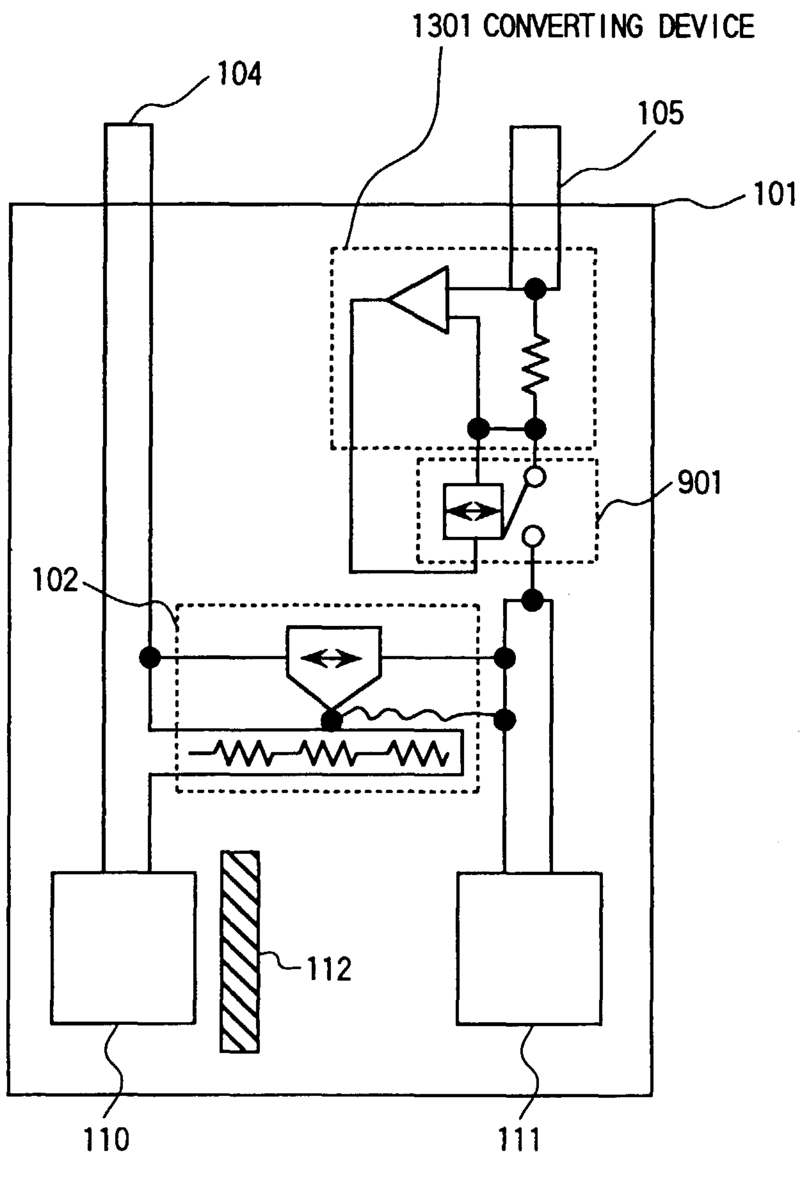

FIG.14

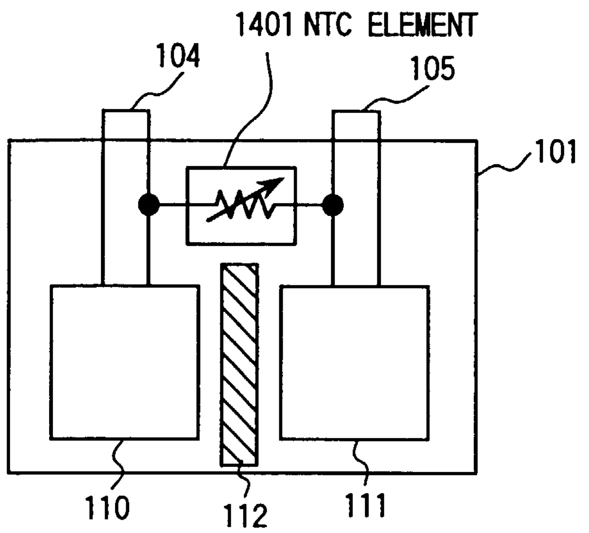
1401 NTC ELEMENT
104
105
101
110
112
111

FIG.15

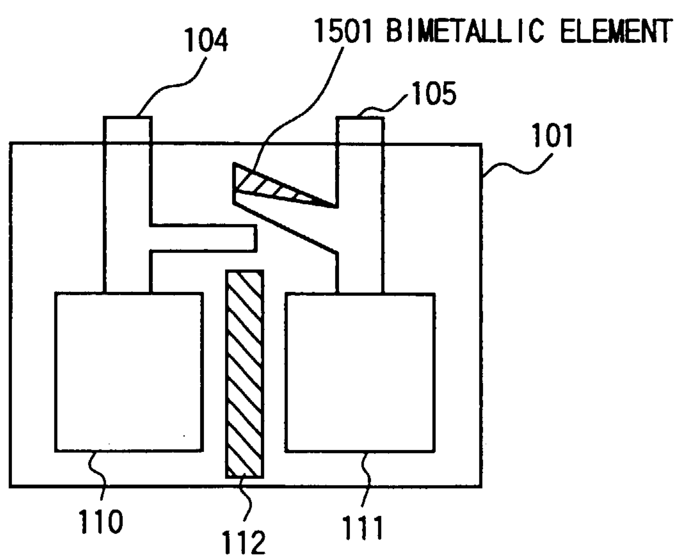
1501 BIMETALLIC ELEMENT
104
105
101
110
112
111

FIG.16

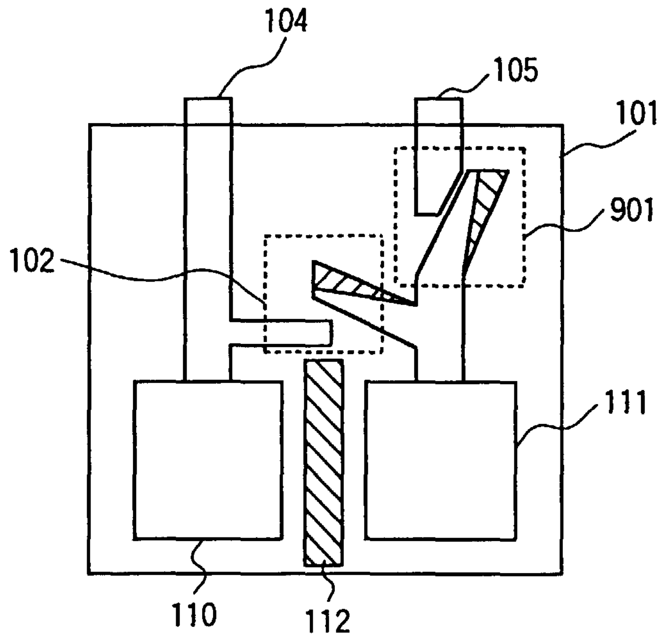
104
105
101
901
102
111
110
112

FIG.17

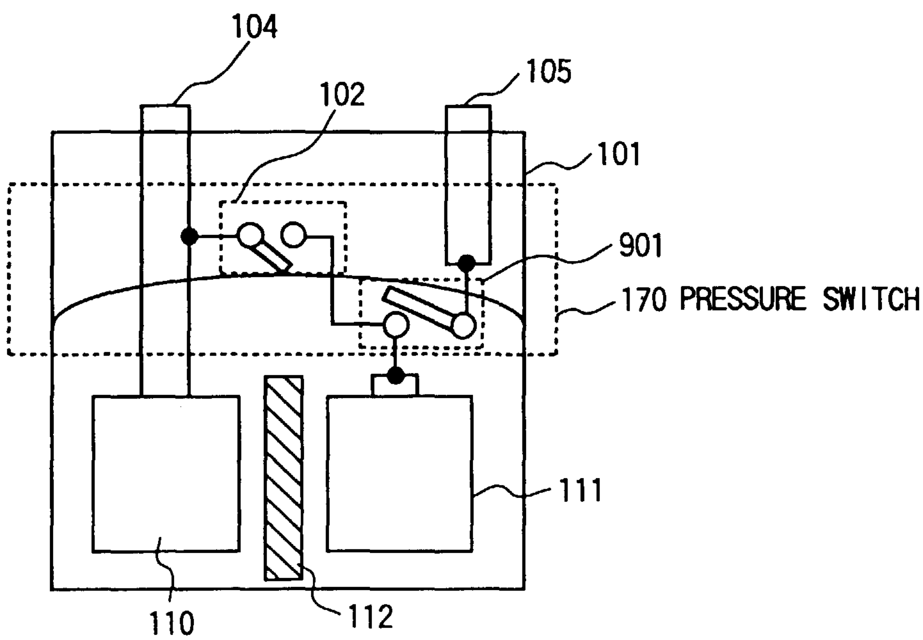
104
105
102
101
901
170 PRESSURE SWITCH
111
110
112

FIG.18

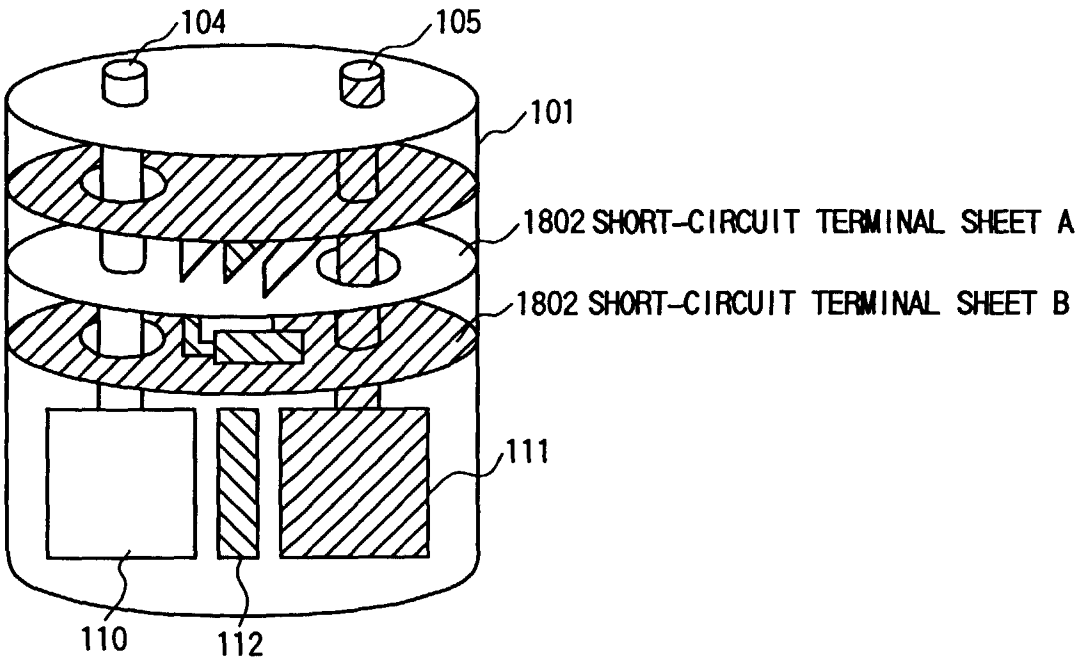
104
105
101
1802 SHORT-CIRCUIT TERMINAL SHEET A
1802 SHORT-CIRCUIT TERMINAL SHEET B
111
110
112

FIG.19

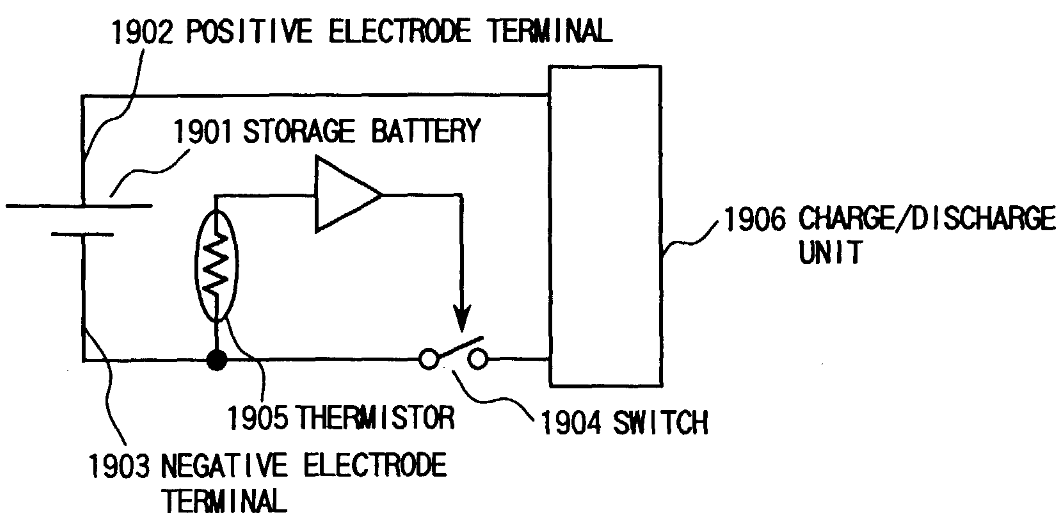
1902 POSITIVE ELECTRODE TERMINAL
1901 STORAGE BATTERY
1906 CHARGE/DISCHARGE UNIT
1905 THERMISTOR
1904 SWITCH
1903 NEGATIVE ELECTRODE TERMINAL

FIG.20

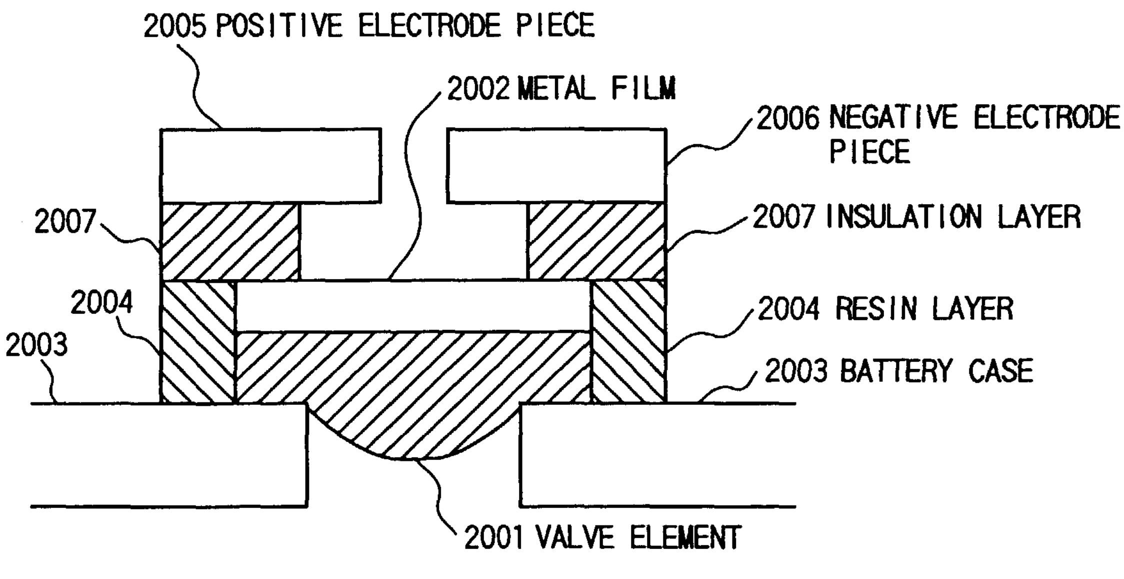
2005 POSITIVE ELECTRODE PIECE
2002 METAL FILM
2006 NEGATIVE ELECTRODE PIECE
2007
2007 INSULATION LAYER
2004
2004 RESIN LAYER
2003
2003 BATTERY CASE
2001 VALVE ELEMENT